# EUROPEAN PATENT SPECIFICATION

(11) **EP 3 379 614 B1**
(45) Date of publication and mention of the grant of the patent: **19.08.2020**
(21) Application number: 17189828.1
(22) Date of filing: 07.09.2017
(51) Int. Cl.: H01M 4/131, H01M 4/36, H01M 4/485, H01M 10/0525, H01M 10/0562

(54) **ELECTRODE CONSTRUCT, ELECTRODE, SECONDARY BATTERY, BATTERY MODULE, BATTERY PACK, AND VEHICLE**
ELEKTRODENKONSTRUKT, ELEKTRODE, SEKUNDÄRBATTERIE, BATTERIEMODUL, BATTERIEPACK UND FAHRZEUG
CONSTRUCTION D'ÉLECTRODE, ÉLECTRODE, BATTERIE SECONDAIRE, MODULE DE BATTERIE, BLOC-BATTERIE ET VÉHICULE

(30) Priority: 24.03.2017 JP 2017058340
(43) Date of publication of application: 26.09.2018
(73) Proprietor: KABUSHIKI KAISHA TOSHIBA, Minato-ku Tokyo 105-8001 (JP)
(72) Inventor: Harada, Yasuhiro, Tokyo, 105-8001 (JP); Takami, Norio, Tokyo, 105-8001 (JP); Yoshima, Kazuomi, Tokyo, 105-8001 (JP)
(74) Representative: Hoffmann Eitle

(56) References cited:
- EP-A1- 3 145 004
- US-A1- 2013 209 897
- US-A1- 2016 268 592
- US-A1- 2017 005 322
- WU KAIQIANG ET AL: "Copper/carbon coated lithium sodium titanate as advanced anode material for lithium-ion batteries", JOURNAL OF POWER SOURCES, ELSEVIER SA, CH, vol. 259, 12 March 2014 (2014-03-12), pages 177-182, XP028842340, ISSN: 0378-7753, DOI: 10.1016/J.JPOWSOUR.2014.02.097

## Description

### FIELD

The present disclosure relates to an electrode construct, an electrode, a secondary battery, a battery module, a battery pack, and a vehicle.

### BACKGROUND

Recently, a nonaqueous electrolyte secondary battery such as a lithium ion secondary battery has been actively researched and developed as a high energy-density battery. The nonaqueous electrolyte secondary battery is anticipated as a power source for vehicles such as hybrid automobiles, electric cars, or an uninterruptible power supply for base stations for portable telephones. Therefore, the nonaqueous electrolyte secondary battery is demanded to, in addition to having a high energy density, be excellent in other performances such as rapid charge-discharge performances and long-term reliability, as well. For example, not only is the charging time remarkably shortened in a nonaqueous electrolyte battery capable of rapid charge and discharge, but the battery is also capable of improving motive performances in vehicles such as hybrid automobiles, and efficient recovery of regenerative energy of motive force.

In order to enable rapid charge-and-discharge, electrons and lithium ions must be able to migrate rapidly between the positive electrode and the negative electrode. However, when a battery using a carbon-based negative electrode is repeatedly subjected to rapid charge-and-discharge, precipitation of dendrite of metallic lithium on the electrode may sometimes occur, raising concern of heat generation or igniting due to internal short circuits.

In light of this, a battery using a metal composite oxide in a negative electrode in place of a carbonaceous material has been developed. In particular, in a battery using an oxide of titanium in the negative electrode, rapid charge-and-discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium as the negative electrode active material has a problem that the energy density is low. In particular, when a material having a high potential relative to metallic lithium is used as a negative electrode material, the voltage becomes lower than that of a conventional battery using a carbonaceous material. Therefore, when such a material is used for systems requiring a high voltage such as an electric vehicle and a large-scale electric power storage system, there is a problem that the number of batteries connected in series becomes large.

The potential of the electrode using an oxide of titanium is about 1.5 V (vs. Li/Li⁺) relative to metallic lithium. The potential of an oxide of titanium arises from the redox reaction between Ti³⁺ and Ti⁴⁺ upon electrochemical insertion and extraction of lithium, and is therefore electrochemically restricted. It has therefore been conventionally difficult to lower the potential of the electrode in order to improve the energy density.

US: 2016/268592 A1 describes an active material for an electrode. The active material includes a mixed phase of a phase of titanium-including composite oxide and a phase of titanium oxide. The titanium-including composite oxide has a crystal structure belonging to the space group Cmca or the space group Fmmm. According to an example, the mixed phase contains a Li₂Na₂Ti₆O₁₄ phase and an anatase type titanium dioxide phase.

K. Wu et al. (Journal of Power Sources 259, 2014, 177-182) report on copper/carbon coated lithium sodium titanate, which is used as an anode material for lithium-ion batteries.

In US 2017/005322 A1, a battery module is described, which includes five nonaqueous electrolyte batteries electrically connected in series. In the batteries, the negative electrode includes an active material, which includes a titanium-containing composite oxide having Na and a metal element M in the crystal structure. The metal element M is at least one selected from the group consisting of Zr, Sn, V, Nb, Ta, Mo, W, Fe, Co, Mn, and Al.

EP 3 145 004 A1 is inter alia concerned with active material for a nonaqueous electrolyte battery. The active material includes a composite oxide, which has a monoclinic crystal structure and is represented by the general formula of Li_{w}Na₂₋ₓM1_{y}Ti_{6-z}M2_{z}O_{13+δ}. In the general formula, M1 is at least one element selected from the group consisting of Mg, Sr, Ca, Ba, Cs and K. M2 is at least one element selected from the group consisting of Zr, Sn, V, Nb, Ta, Mo, W, Fe, Co, Mn and Al. The subscript w is within the range of 0 ≤ w ≤ 6. The subscript x is within the range of 0 ≤ x < 2. The subscript y is within the range of 0 ≤y < 2. The subscript z is within the range of 0< z ≤ 6. The subscript δ is within the range of -0.1 ≤ δ ≤ 0.1.

US 2013/209897 A1 relates to a mesoporous metal oxide microsphere electrode. The mesoporous metal oxide microsphere compositions comprise (a) microspheres with an average diameter between 200 nm and 10 µm and (b) mesopores on the surface and interior of the microspheres. The mesopores have an average diameter between 1 nm and 50 nm, and the microspheres have a surface area between 50 m²/g and 500 m²/g.

### BRIEF DESCRIPTION OF THE DRAWINGS

FIG. 1 shows charge-and-discharge curves of electrodes containing Li₂Na_{1.75}Ti_{5.75}Nb_{0.25}O₁₄;
FIG. 2 is a cross-sectional view schematically showing an example of a secondary battery according to a second approach;
FIG. 3 is an enlarged cross-sectional view of section A of the secondary battery shown in FIG. 2;
FIG. 4 is a partially cut-out perspective view schematically showing another example of the secondary battery according to the second approach;
FIG. 5 is an enlarged cross sectional view of section B of the secondary battery shown in FIG. 4;
FIG. 6 is a schematic cross-sectional view showing an example of an electrode complex that may be included in another example of a secondary battery according to the approach;
FIG. 7 is a schematic cross-sectional view showing another example of an electrode complex that may be included in the other example of a secondary battery according to the approach;
FIG. 8 is a schematic cross-sectional view showing the other example of a secondary battery according to the approach;
FIG. 9 is a perspective view schematically showing an example of a battery module according to an approach;
FIG. 10 is an exploded perspective view schematically showing an example of a battery pack according to an approach;
FIG. 11 is a block diagram showing an electric circuit of the battery pack shown in FIG. 10;
FIG. 12 is a cross-sectional view schematically showing an example of a vehicle according to an approach; and
FIG. 13 is a diagram schematically showing another example of the vehicle according to an approach.

### DETAILED DESCRIPTION

According to one approach, the present invention relates to an electrode construct including an active material-containing layer and a sodium ion-blocking layer. The active material-containing layer contains a sodium-containing titanium composite oxide having a crystal structure belonging to a space group Cmca, a space group Fmmm, or both the space group Cmca and the space group Fmmm. The sodium ion-blocking layer is disposed on a surface of the active material-containing layer. In addition, the sodium ion-blocking layer contains a material impermeable to sodium ions, wherein the material impermeable to sodium ions comprises a monoclinic titanium dioxide.

According to another approach of the present invention, an electrode including the electrode construct of the above approach is provided.

According to still another approach of the present invention, a secondary battery including a positive electrode, a negative electrode, and an electrolyte is provided. The negative electrode is the electrode according to the above approach.

According to yet another approach of the present invention, a battery module including plural secondary batteries is provided. The secondary batteries include the secondary battery according to the above approach. The secondary batteries are electrically connected in series, in parallel, or in a combination of in series and in parallel.

According to still another approach of the present invention, a battery pack including secondary batteries is provided. The secondary batteries of the battery pack include the secondary battery according to the above approach.

According to yet another approach of the present invention, a vehicle including the battery pack according to the above approach is provided.

According to the approaches, provided are an electrode construct that can realize a secondary battery that can exhibit a high energy density, and is excellent in output performance and life performance at high temperature, an electrode including this electrode construct, a secondary battery including this electrode, a battery module including this secondary battery, a battery pack including this secondary battery, and a vehicle including this battery pack.

Approaches will be explained below with reference to the drawings. Structures common among the approaches are represented by the same symbols and over-lapping explanations are omitted. Also, each drawing is a typical view for explaining the approaches and for promoting an understanding of the approaches. Though there are parts different from an actual device in shape, dimension and ratio, these structural designs may be appropriately changed taking the following explanations and known technologies into consideration. In addition, similar effects can be achieved, even if the compositional elements include inevitable impurities accompanying industrial materials or industrial processes.

### (First Approach)

According to a first approach, there is provided an electrode construct including an active material-containing layer and a sodium ion-blocking layer. The sodium ion-blocking layer is formed on the surface of the active material-containing layer. In addition, the sodium ion-blocking layer contains a material impermeable to sodium ions, wherein the material impermeable to sodium ions comprises a monoclinic titanium dioxide.

In one aspect, the active material-containing layer contains a sodium-containing titanium composite oxide having a crystal structure belonging to a space group Cmca, a crystal structure belonging to a space group Fmmm, or a crystal structure in which the crystal structure belonging to the space group Cmca and the crystal structure belonging to the space group Fmmm coexist.

In another aspect, the sodium-containing titanium composite oxide includes a composite oxide represented by the general formula Li₂₊ₐM1_{2-b}Ti_{6-c}M2_{d}O_{14+δ}. Here, M1 is Na, or includes Na and at least one selected from the group consisting of Sr, Ba, Ca, Mg, Na, Cs, Rb, and K. M2 is at least one selected from the group consisting of Zr, Sn, V, Nb, Ta, Mo, W, Y, Fe, Co, Cr, Mn, Ni, and Al. a falls within the range of 0 ≤ a ≤ 6, b falls within the range of 0 ≤ b < 2, c falls within the range of 0 ≤ c < 6, d falls within the range of 0 ≤ d < 6, and δ falls within the range of -0.5 ≤ δ ≤ 0.5.

In either of the aspects, the electrode construct may be included in an electrode to configure a battery electrode. As the battery electrode, the electrode may be included in a secondary battery, for example, as a negative electrode. The secondary battery may be a lithium secondary battery. If an active material is contained in the lithium secondary battery, lithium may be inserted into and extracted from the active material.

When lithium titanate is used as a battery active material, it has been difficult to improve the energy density. Considering this, sodium-containing titanium composite oxide having a crystal structure belonging to the space group Cmca or Fmmm was found as an active material capable of realizing a secondary battery for which the insertion/extraction reaction of lithium progress at a potential lower than for lithium titanate, while having excellent low-temperature input performance and life performance equivalent to a case of using lithium titanate. In a sodium-containing titanium composite oxide having such a crystal structure, the insertion/extraction reaction of lithium progresses at a potential of from, about 1.2 V to 1.5 V (vs. Li/Li⁺). For this reason, a secondary battery using a negative electrode containing such a sodium-containing titanium composite oxide exhibits a battery voltage higher than that of a secondary battery containing lithium titanate.

On the other hand, the sodium-containing titanium composite oxide contains sodium, and therefore exhibits a high basicity. For this reason, if the sodium-containing titanium composite oxide is used as a battery active material, sodium ions from within the electrode become extracted and eluted, and thus, side reactions with the liquid electrolyte readily occur. In particular, properties such as the battery life become remarkably low at temperatures higher than 45°C.

The above described sodium-containing titanium composite oxide, which may be included in the active material-containing layer included in the electrode construct according to the first approach, has an average potential of Li insertion within the potential range of 0.5 V to 1.45 V (vs. Li/Li⁺) with reference to the oxidation-reduction potential of Li. As a result of this, a secondary battery using an electrode including the electrode construct according to the first approach as the negative electrode can exhibit a higher battery voltage than a secondary battery using, for example, a titanium composite oxide having a Li insertion potential of 1.55 V (vs. Li/Li⁺) in the negative electrode.

In addition, much Li ions can be inserted into the above described sodium-containing titanium composite oxide within a potential range of from 1.0 V to 1.45 V (vs. Li/Li⁺).

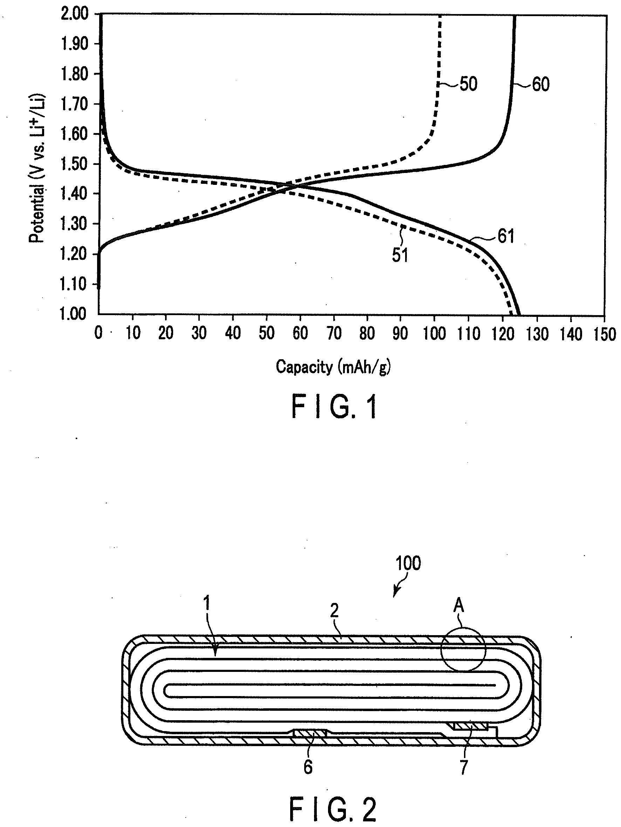

Because such a sodium-containing titanium composite oxide is included in the electrode construct according to the first approach, much Li ions can be stably inserted into the sodium-containing titanium composite oxide in the active material-containing layer within the potential range of 1.0 V to 1.45 V (vs. Li/Li⁺), which is the oxidation-reduction potential of titanium. On top of that, because side reactions with an electrolyte can be suppressed, even under temperature conditions higher than 45°C, life performance is excellent. With reference to FIG. 1, the reason is explained below.

FIG. 1 is a graph showing the initial charge and discharge curves (a discharge curve 50 and a charge curve 51) obtained at 60°C by a half cell that uses a conventional electrode including an active material-containing layer containing a composite oxide Li₂Na_{1.75}Ti_{5.75}Nb₀.₂₅O₁₄ as an active material, and uses a counter electrode of metallic lithium. FIG. 1 also shows the charge and discharge curves (a discharge curve 60 and a charge curve 61) obtained at 60°C by a half cell that uses an electrode including an electrode construct with a monoclinic titanium oxide serving as a sodium ion-blocking layer provided on the surface of an active material-containing layer containing a composite oxide Li₂Na_{1.75}Ti_{5.75}Nb_{0.25}O₁₄, and uses a counter electrode of metallic lithium. Note that the composite oxide Li₂Na_{1.75}Ti_{5.75}Nb_{0.25}O₁₄ is an example of a sodium-containing titanium composite oxide that the electrode construct according to the first approach may contain in the active material-containing layer.

As shown in FIG. 1, the initial charge and discharge curves (the discharge curve 50 and the charge curve 51) of the conventional electrode containing the composite oxide Li₂Na_{1.75}Ti_{5.75}Nb_{0.25}O₁₄, that is, the electrode without the sodium ion-blocking layer have continuous potential changes in the potential range of about 1.4 V to 1.45 V (vs. Li/Li⁺). On the other hand, the lithium extraction (discharge) capacity is lower relative to the lithium insertion (charge) capacity, and the initial charge-and-discharge efficiency is low. In addition, the overvoltage rises due to the influence of an impurity film generated by a side reaction with the electrolyte. On the other hand, in the charge and discharge curves (the discharge curve 60 and the charge curve 61) of the electrode including the electrode construct including the monoclinic titanium oxide layer and the composite oxide Li₂Na_{1.75}Ti_{5.75}Nb_{0.25}O₁₄, the initial charge-and-discharge efficiency is high, and the change in the charge and discharge curves caused by the overvoltage is small as compared to the conventional electrode. When such an electrode is used as the negative electrode, it is possible to provide a secondary battery capable of exhibiting a high voltage and a high energy density, and excellent in output performance and life at a high temperature of 45°C or more.

The electrode construct according to one aspect of the first approach contains the sodium-containing titanium composite oxide and thus contains sodium atoms, while the average operating potential (vs. Li/Li⁺) with respect to the redox potential of Li is low, within the potential range of from 1.0 V to 1.45 V (vs. Li/Li⁺). Nevertheless, the active material of this aspect has excellent life performance at a high temperature. The reason will be explained below.

In one aspect, the electrode construct according to the first approach includes an active material-containing layer containing a sodium-containing titanium composite oxide represented by the general formula Li₂₊ₐMl_{2-b}Ti_{6-c}M2_{d}O_{14+δ}. M1 is Na, or includes Na and at least one selected from the group consisting of Sr, Ba, Ca, Mg, Cs, Rb, and K. M2 is at least one selected from the group consisting of Zr, Sn, V, Nb, Ta, Mo, W, Y, Fe, Co, Cr, Mn, Ni, and Al. Also, a satisfies 0 ≤ a ≤ 6, b satisfies 0 ≤ b < 2, c satisfies 0 ≤ c < 6, d satisfies 0 ≤ d < 6, and δ satisfies -0.5 ≤ δ ≤ 0.5. The electrode construct according to the approach includes a sodium ion-blocking layer provided on the surface of the active material-containing layer.

Since the sodium-containing titanium composite oxide contains sodium in addition to lithium, sodium ions (Na ions) evacuate from the crystal structure interior, and the basicity on the particle surface of the composite oxide or on the surface of a layer containing the composite oxide becomes high. More specifically, the pH of the sodium-containing titanium composite oxide can be, for example, 10.5 to 12. Note that the pH here means a value measured by a method described later. If the composite oxide comes into contact with the electrolyte of the battery in this state, Na ions are eluted from the composite oxide and taken into the electrolyte.

If the electrolyte is a liquid, elution of Na ions is caused by a concentration gradient. For this reason, not only does elution from the surfaces of composite oxide occur, but also, Na ion migration from the inside of the bulk of particles or layer occurs. In particular, under a high temperature of 45°C or more, the diffusion velocity of Na ions in a solid improves, and elution is promoted. For this reason, the composition of the composite oxide changes, and the charge-and-discharge capacity lowers due to the unstable crystal structure or generation of an impurity phase.

On the other hand, if the electrolyte is a solid electrolyte, diffusion of lithium ions (Li ions) in the solid is slower than in a liquid electrolyte, and therefore, the elution amount of Na ions is small. However, under a high temperature of 45°C or more, the insertion reaction of Na ions into the solid electrolyte is promoted due to the influence of a thermal vibration. Since the Na ions inserted into the crystal structure substitute into the occupancy sites for Li ions, the path of ionic conduction is remarkably impaired. Accordingly, lithium ion conductivity lowers, and the internal resistance of the battery greatly increases.

In the case of using the stacked electrode construct according to the first approach, the active material-containing layer containing the sodium-containing titanium composite oxide comes into contact with the electrolyte through the sodium ion-blocking layer provided on the surface thereof. The sodium ion-blocking layer contains a monoclinic titanium dioxide. Lithium can be inserted/extracted into/from the monoclinic titanium oxide, but sodium can hardly be inserted. That is, the monoclinic titanium oxide is a material having excellent Li ion selectivity. This can suppress the reaction of taking Na ions from the surface of the active material-containing layer into the electrolyte.

Furthermore, since the Na ions eluted from the active material-containing layer are blocked at the contact interface between the active material-containing layer and the sodium ion-blocking layer, the Na ion concentration at the contact interface can be raised. By executing high-rate discharge in the initial discharge of the battery and applying an overvoltage, a region where the Na ion concentration is high can be formed. More specifically, defining, for example, the discharge capacity at 10 hour discharge rate (0.1 C) as a reference (100%), discharge (high-rate discharge) is performed at an hourly discharge rate with which the discharge capacity is equal to or greater than 10% and less than 30%, thereby obtaining the region. This can obtain the effect of relaxing the concentration gradient of Na ions between the inside of the electrolyte and the inside of the active material-containing layer (a region deeper than the contact interface to the sodium ion-blocking layer) and suppressing elution of Na ions from the bulk portion of the active material-containing layer. As a result, life performance at a high temperature of 45°C or more can greatly be improved.

The composite oxide in the active material-containing layer may take a particulate form. That is, the composite oxide in the active material-containing layer may be active material particles. Similarly, the material having Li ion selectivity, that is, the monoclinic titanium oxide contained in the sodium ion-blocking layer may take a particulate form. The active material particles and the particles of the material of the sodium ion-blocking layer may be in contact with each other. For this reason, the reaction of taking Na ions from the surfaces of the active material particles into the electrolyte can be suppressed by the material of the sodium ion-blocking layer.

Since the Na ions eluted from the active material particle surfaces are blocked at the contact interface between the active material particles and the sodium ion-blocking layer, the Na ion concentration at the contact interface can be raised. By executing high-rate discharge in the initial discharge of the battery and applying an overvoltage, a region where the Na ions concentration is high can be formed. More specifically, defining the discharge capacity at 10 hour discharge rate (0.1 C) as a reference (100%), discharge (high-rate discharge) is performed at an hourly discharge rate with which the discharge capacity is equal to or greater than 10% and less than 30%, thereby obtaining the region. This can obtain the effect of relaxing the concentration gradient of Na ions to the inside of the active material particles and suppressing elution of Na ions from the bulk of the particles. As a result, life performance at a high temperature of 45°C or more can greatly be improved.

Due to the above-described reasons, the electrode construct according to the first approach can provide a secondary battery capable of suppressing side reactions and exhibiting excellent life performance, while containing the sodium-containing titanium composite oxide whose average operating potential (vs. Li/Li⁺) with respect to the redox potential of lithium is reduced, within the potential range of from 1.0 V to 1.45 V (vs. Li/Li⁺).

The sodium-containing titanium composite oxide contained in the active material-containing layer in the electrode construct according to the first approach may include a composite oxide having a crystal structure in which a crystal phase belonging to a symmetry of the space group Cmca and space group Fmmm is mixed, or include a composite oxide having a crystal structure similar to the Cmca or Fmmm symmetry. Even in such cases, the same effects can be obtained as those obtained in the aspect including the composite oxide belonging to the symmetry of the space group Cmca or composite oxide belonging to the symmetry of the space group Fmmm. Specific examples of the symmetry similar to the Cmca and Fmmm symmetry include space groups Cmcm, Pmma, and Cmma.

At least a part of the surface of the sodium-containing titanium composite oxide is preferably covered with carbon. A preferable amount of carbon coverage is 0.5 wt% to 5 wt% relative to the weight of the composite oxide. If the amount of carbon coverage is larger than 0.5 wt%, not only does electron conductivity improve, but additionally, elution of sodium ions is suppressed. Hence, the sodium ion elution suppressing effect can be enhanced together with the sodium ion-blocking layer. If the amount of carbon coverage is less than 5 wt%, the movement of lithium ions is not impeded, and high charge-and-discharge performance can be obtained. More preferably, the amount of carbon coverage ranges from 1 wt% to 3 wt%.

The sodium-containing titanium composite oxide in the active material-containing layer included in the electrode construct according to the first approach may take, for example, a particulate form. The average particle size of the sodium-containing titanium composite oxide in the electrode construct according to the first approach is not particularly limited, and may be changed in accordance with desired battery performance.

The material having excellent Li ion selectivity, that is, the monoclinic titanium dioxide in the sodium ion-blocking layer included in the electrode construct according to the first approach may take, for example, a particulate form. The average particle size of the material of the sodium ion-blocking layer in the electrode construct according to the first approach is not particularly limited, and may be changed as needed.

### <BET Specific Surface Area>

The BET specific surface area of the sodium-containing titanium composite oxide that the electrode construct according to the first approach contains in the active material-containing layer is preferably equal to or greater than 1 m²/g and less than 50 m²/g. The BET specific surface area of the sodium-containing titanium composite oxide is more preferably 2 m²/g to 5 m²/g.

If the BET specific surface area is 1 m²/g or more, the contact area between the sodium-containing titanium composite oxide and the material of the sodium ion-blocking layer can be ensured at the contact interface between the active material-containing layer and the sodium ion-blocking layer, and a satisfactory Na ion elution suppressing effect can readily be obtained. On the other hand, if the BET specific surface area is less than 50 m²/g, the reactivity between the active material and the electrolyte is not too high, and life performance can be improved. If the BET specific surface area of the sodium-containing titanium composite oxide is 5 m²/g or less, satisfactory productivity can be obtained because the stability of a coating slurry containing the active material, which is used to manufacture an electrolyte as described later, improves.

On the other hand, the BET specific surface area of the material having Li ion selectivity in the sodium ion-blocking layer is preferably equal to or greater than 10 m²/g and less than 300 m²/g. The BET specific surface area is more preferably 15 m²/g to 50 m²/g. If the BET specific surface area is 10 m²/g or more, the contact area to the sodium-containing titanium composite oxide can be ensured at the contact interface between the active material-containing layer and the sodium ion-blocking layer. On the other hand, if the BET specific surface area is less than 300 m²/g, a longer life can be expected because the side reaction between the electrolyte and the material of the sodium ion-blocking layer can be suppressed.

A ratio S_{oxide}/S_{block} of a BET specific surface area S_{oxide} of the sodium-containing titanium composite oxide to a BET specific surface area S_{block} of the material of the sodium ion-blocking layer preferably satisfies 0.01 ≤ S_{oxide}/S_{block} < 1.0. If the BET specific surface area ratio falls within this range, the particle surface of the sodium-containing titanium composite oxide is readily covered by the material of the sodium ion-blocking layer, and therefore, the Na ion elution suppressing effect greatly improves.

Here, for the measurement of the specific surface area, a method is used where molecules, in which an occupied area in adsorption is known, are adsorbed onto the surface of powder particles at the temperature of liquid nitrogen, and the specific surface area of the sample is determined from the amount of adsorbed molecules. The most often used method is a BET method based on the low temperature/low humidity physical adsorption of an inert gas. This BET method is a method based on the BET theory, which is the most well-known theory of the method of calculating the specific surface area in which the Langmuir theory, which is a monolayer adsorption theory, is extended to multilayer adsorption. The specific surface area determined by the above method is referred to as "BET specific surface area".

### <Weights Per Unit Area and Densities of Active Material-Containing Layer and Sodium Ion-Blocking Layer>

A density D_{AL}(g/cm³) and a weight M_{AL} (g/cm²) per unit area of the active material-containing layer included in the electrode construct according to the first approach are not particularly limited, and can be changed in accordance with desired battery performance. On the other hand, a weight M_{block} per unit area of the sodium ion-blocking layer preferably falls within the range of 0.01 ≤ M_{block}/M_{AL} ≤ 1.0 with respect to the weight M_{AL} per unit area of the active material-containing layer. More preferably, 0.05 ≤ M_{block}/M_{AL} ≤ 0.2.

A density D_{block} of the sodium ion-blocking layer is not particularly limited, and can be changed in accordance with desired battery performance. For example, to obtain a high-output battery, D_{block} < D_{AL} is set, thereby speeding up the movement of Li ions in the electrolyte. Conversely, to give priority to a high-temperature life over output performance, D_{block} ≥ D_{AL} is preferably set. This can make a closely packed sodium ion-blocking layer and more efficiently suppress elution of Na ions.

A thickness d_{AL} of the active material-containing layer and a thickness d_{block} of the sodium ion-blocking layer preferably hold a relation d_{AL} > d_{block}. The ratio d_{block}/d_{AL} of the thicknesses of the layers more preferably satisfies 0.01 < d_{block}/d_{AL} < 0.3.

### <Production Method>

The sodium-containing titanium composite oxide that may be contained in the active material-containing layer of the electrode construct may be produced, for example, by the method described below.

First, raw materials, such as oxides and salts, are mixed in an appropriate stoichiometric ratio to obtain a mixture. The above salt is preferably a salt such as a carbonate or nitrate, which decomposes at a relatively low temperature to form an oxide. Next, the obtained mixture is ground and mixed as uniformly as possible. Subsequently, the resulting mixture is pre-calcined. The pre-calcination is performed at a temperature range of 600°C to 850°C in air for a total of 3 to 15 hours.

Then, the calcination temperature is increased and main-calcination is performed at a temperature range of from 900°C to 1500°C in air.

At this time, lithium, which is a light element, may become vaporized due to calcining at a temperature of 900°C or higher. In such a case, a sample having a correct composition can be obtained, for example, by compensating for the amount of lithium that becomes vaporized, as follows. For example, the vaporized amount of lithium under the calcining conditions may be investigated, and a raw material including lithium may be provided in excess by that amount.

Alternatively, for example, a mixture having the same composition as the pre-calcined raw material mixture may be prepared, and the pre-calcined product may be covered with the mixture. The pre-calcined product is subjected to main-calcination while being covered with the raw material mixture, whereby the raw material mixture forms an outer shell, and vaporization of lithium from the pre-calcined product can be prevented. After the main-calcination, the outer shell is removed.

Furthermore, it is more preferable to prevent lattice defects caused for example by oxygen deficiency. For example, the raw material powder may be pressure-molded into pellets or rods before main-calcination, whereby the area exposed to atmosphere is decreased, and the contact area between the particles is increased. Generation of lattice defects can be suppressed by calcining in this manner. In the case of industrial mass production, it is preferred that oxygen deficiency be repaired by calcining the raw material powder under high oxygen partial pressure such as under an oxygen atmosphere, or by heat treatment (annealing) in the temperature range of from 400°C to 1000°C after standard calcination in air.

On the other hand, oxygen deficiency may be intentionally left, thereby changing the oxidation number of titanium contained in the composite oxide to increase electron conductivity. However, if generation of lattice defects is not suppressed, the crystallinity decreases, and thus the battery performance may decrease when the composite oxide is used as a battery active material. In order to prevent this, it is more preferable to follow the annealing treatment with quenching, for example, by rapidly cooling to the temperature of liquid nitrogen.

### <Method of Synthesizing Monoclinic Titanium Oxide>

A monoclinic titanium oxide usable as the sodium ion-blocking layer of the electrode construct according to the first approach can be obtained by, for example, calcining a proton exchanged product of starting materials. As the starting material, an alkali titanate compound such as Na₂Ti₃O₇, K₂Ti₄O₉, or Cs₂Ti₅O₁₂ can be used. The alkali titanate compound as a raw material is prepared by a general solid reaction method. For example, oxides and carbonates as raw material are mixed at an appropriate stoichiometric mixture ratio and heated, thereby synthesizing the alkali titanate compound. Alternatively, a generally commercially available reagent of an alkali titanate compound may be used.

First, to remove impurities, a powder of an alkali titanate compound is washed well with distilled water. Next, an acid such as hydrochloric acid, nitric acid, or sulfuric acid having a concentration of 0.5 M to 2 M is added to the alkali titanate compound powder, and the mixture is stirred. With this acid treatment, the alkali cations of the alkali titanate compound are exchanged with protons, and a proton exchanged product is obtained. The acid treatment is preferably performed until the protons are completely exchanged.

When performing the acid treatment at room temperature of about 25°C, using hydrochloric acid having a concentration of about 1 M, the acid treatment time is preferably 24 hours or more, and more preferably for about one to two weeks. To ensure advancement of the proton exchange, the acid solution is preferably exchanged with a new one every 24 hours.

When the proton exchange ends, an alkali solution such as an aqueous solution of lithium hydroxide may be added to neutralize residual acid. When proton exchange is completed, the reaction product is sufficiently washed with distilled water. The washing is performed until the pH of the wash water falls within the range of 6 to 8, although the degree of washing is not particularly limited. Then, the product is dried, thereby obtaining a proton exchanged product that is an intermediate product. Here, the step of neutralization washing of the residual acid or drying may be omitted, and the process may be advanced to the step of heat treatment.

Next, the obtained proton exchanged product is heat-treated to obtain a monoclinic titanium dioxide that is the target product. The heating temperature is preferably 250°C to 500°C, and more preferably, 350°C to 400°C in particular. If the heating temperature is 300°C or more, the dehydration reaction smoothly progresses. Hence, excellent crystallinity can be obtained, and the charge-and-discharge efficiency of the electrode becomes high. On the other hand, a heating temperature of 500°C or less is preferable because the dehydration reaction does not progress too rapidly, and impurity phase generation of titanium dioxide having an anatase structure that lowers the charge-and-discharge efficiency is suppressed. The heating time is preferably 1 hour to 12 hours.

Note that the protons may be left remaining in the crystal structure of the monoclinic titanium oxide by adjusting the heating time and temperature. More specifically, the heating temperature may be 260°C and the time may be about 1 to 2 hours. Even when the monoclinic titanium oxide having remaining protons is used, the same sodium ion elution suppressing effect can be obtained.

### <Method of Manufacturing Electrode Construct>

The electrode construct can be produced, for example, in the following way.

First, an active material-containing layer is produced. The active material-containing layer can be produced, for example, in the following way.

A slurry containing a sodium-containing titanium composite oxide as an active material is prepared. For example, the slurry is applied onto a current collector. The applied slurry is dried, thereby obtaining an active material-containing layer. The slurry used here may include an active material other than the sodium-containing titanium composite oxide, a conductive agent, and a binder. At this time, the slurry containing the sodium-containing titanium composite oxide may be applied to one surface or both of reverse surfaces of the current collector. Alternatively, a slurry containing a sodium-containing titanium composite oxide may be applied to one surface of the current collector and dried to produce a first active material-containing layer, and a slurry containing another active material (for example, a positive electrode active material, if the sodium-containing titanium composite oxide is a negative electrode active material) may be applied to the reverse surface of the current collector and dried to produce a second active material-containing layer, thereby producing a bipolar electrode.

Subsequently, a sodium ion-blocking layer is formed on the obtained active material-containing layer.

First, the material of the sodium ion-blocking layer and a binder are suspended in a solvent to prepare a slurry. As the material of the sodium ion-blocking layer, for example, a monoclinic titanium dioxide synthesized by the above-described method can be used.

The slurry is applied onto the active material-containing layer containing the sodium-containing titanium composite oxide produced, for example, as described above. By drying the coat, a sodium ion-blocking layer is formed on the active material-containing layer. After that, the active material-containing layer and the sodium ion-blocking layer are pressed, thereby obtaining an electrode construct.

### <Method of Measuring Compound in Electrode Construct>

A method of obtaining an X-ray diffraction diagram of each compound in the active material-containing layer and the sodium ion-blocking layer by powder x-ray diffraction and a method of examining the composition of materials contained in each layer will be described next. Additionally, a method of examining an Na ion concentration in a region near the contact interface between the active material-containing layer and the sodium ion-blocking layer and a method of measuring the weight per unit area and density for each of the active material-containing layer and the sodium ion-blocking layer will be explained. A method of measuring the carbon amount in the active material contained in the active material-containing layer will also be described.

When a target active material to be measured is included in an electrode material of a secondary battery, a pre-treatment is performed as described below.

### <Pre-Treatment>

First, a state close to the state in which Li ions are completely extracted from a crystal of the composite oxide in the active material-containing layer is achieved. For example, when the target active material to be measured is included in a negative electrode active material-containing layer, the battery is brought into a completely discharged state. For example, a battery can be discharged in a 25°C environment at 0.1 C current to a rated end voltage, whereby the discharged state of the battery can be achieved. Although a slight amount of residual lithium ions may exist even in the discharged state, this does not significantly affect results of powder X-ray diffraction measurement described below.

Next, the battery is disassembled in a glove box filled with argon, and the electrode including the electrode construct is taken out. The taken-out electrode is washed with an appropriate solvent and dried under reduced pressure. For example, ethyl methyl carbonate may be used for washing. After washing and drying, whether or not there are white precipitates such as a lithium salt on the surface is examined.

The washed electrode is processed or treated into a measurement sample as appropriate, depending on the measurement method to be subjected to. For example, in the case of subjecting to the powder X-ray diffraction measurement, the washed electrode is cut into a size having the same area as that of a holder of the powder X-ray diffraction apparatus, and used as a measurement sample.

Thus, pre-treatment is performed as described above.

### <Method for Obtaining X-Ray Diffraction Diagram of Composite Oxide according to Powder X-Ray Diffraction>

The crystal structure included in the active material and material of the sodium-ion blocking layer can be examined by powder X-Ray Diffraction (XRD).

The powder X-ray diffraction measurement with respect to the active material and material of the sodium ion-blocking layer is performed as follows:
First, the target sample is ground until an average particle size reaches about 5 µm. Even if the original average particle size is less than 5 µm, it is preferable that the sample is subjected to a grinding treatment with a mortar, in order to grind apart aggregates. The average particle size can be obtained by laser diffraction, for example.

The ground sample is filled in a holder part having a depth of 0.5 mm, formed on a glass sample plate. As the glass sample plate, for example, a glass sample plate manufactured by Rigaku Corporation is used. At this time, care should be taken to fill the holder part sufficiently with the sample. Precaution should be taken to avoid cracking and formation of voids caused by insufficient filling of the sample. Then, another glass plate is used to smoothen the surface of the sample by sufficiently pressing the glass plate against the sample. In this case, precaution should be taken to avoid too much or too little a filling amount, so as to prevent any rises and dents in the basic plane of the glass holder.

Next, the glass plate filled with the sample is set in a powder X-ray diffractometer, and a diffraction pattern (XRD pattern; X-Ray Diffraction pattern) is obtained using Cu-Kα rays.

When the target active material to be measured is included in the electrode material of a secondary battery, first, measurement sample is prepared according to the previously described procedure. The obtained measurement sample is affixed directly to the glass holder, and measured.

Upon which, the position of the peak originating from the electrode substrate such as a metal foil is measured in advance. The peaks of other components such as an electro-conductive agent and a binder are also measured in advance. In such a case that the peaks of the substrate and active material overlap with each other, it is desirable that the layer including the active material (e.g., the active material-containing layer) is separated from the substrate, and subjected to measurement. This is in order to separate the overlapping peaks when quantitatively measuring the peak intensity. For example, the active material-containing layer can be separated by irradiating the electrode substrate with an ultrasonic wave in a solvent.

On the other hand, if the sodium ion-blocking layer as the measurement target is included at the surface of the active material-containing layer in the electrode of the secondary battery, a measurement sample is prepared in accordance with the above-described procedure. The obtained measurement sample is directly attached to a glass holder, and measurement is performed. Accordingly, the diffraction ray intensity of the layer disposed on the surface of the active material-containing layer can be increased.

At this time, the position of a peak derived from an electrode substrate such as a metal foil or from a compound (for example an active material, an electro-conductive agent, or a binder) in the active material-containing layer is measured in advance. If the peak of such constituent materials of the electrode and the peak of a material of the sodium ion-blocking layer overlap, fitting of two or more phases can be executed by the Rietveld method described later, thereby analyzing the crystal structure from each respective peak information.

In the case where there is high degree of orientation in the sample, there is the possibility of deviation of peak position and variation in an intensity ratio, depending on how the sample is filled. For example, in some cases, there may be observed from the results of the later-described Rietveld analysis, an orientation, in which crystal planes had become arranged in a specific direction when packing the sample, depending on the shapes of particles. Alternatively, in some cases, influence due to orientation can be seen from measuring of a measurement sample that had been obtained by taking out from a battery.

Such a sample having high orientation is measured using a capillary (cylindrical glass narrow tube). Specifically, the sample is inserted into the capillary, which is then mounted on a rotary sample table and measured while being rotated. Such a measuring method can provide the result with the influence of orientation reduced.

When an intensity ratio measured by this method is different from an intensity ratio measured using the flat plate holder or glass holder described above, the influence due to the orientation is considerable, such that measurement results of the rotary sample table are adopted.

As an apparatus for powder X-ray diffraction measurement, SmartLab manufactured by Rigaku is used, for example. Measurement is performed under the following condition:
X-ray source: Cu target
Output: 45 kV, 200 mA
soller slit: 5 degrees in both incident light and received light
step width (20): 0.02 deg
scan speed: 20 deg/min
semiconductor detector: D/teX Ultra 250
sample plate holder: flat glass sample plate holder (0.5 mm thick)
measurement range: range within 5° ≤ 2θ ≤ 90°

When another apparatus is used, in order to obtain measurement results equivalent to those described above, measurement using a standard Si powder for powder X-ray diffraction is performed, and measurement is conducted with conditions adjusted such that a peak intensity and a peak top position correspond to those obtained using the above apparatus.

Conditions of the above powder X-ray diffraction measurement are set, such that an XRD pattern applicable to Rietveld analysis is obtained. In order to collect data for Rietveld analysis, specifically, the measurement time or X-ray intensity is appropriately adjusted in such a manner that the step width is made 1/3 to 1/5 of the minimum half width of the diffraction peaks, and the intensity at the peak position of strongest reflected intensity is 5,000 cps or more. Rietveld analysis can be performed, for example, based on the method described in "Funmatsu X sen Kaisetsu no Jissai (Reality of Powder X-Ray Analysis)", first edition (2002), X-Ray Analysis Investigation Conversazione, The Japan Society for Analytical Chemistry, written and edited by Izumi Nakai and Fujio Izumi (Asakura Publishing Co., Ltd.).

Using the above-described method, information on the crystal structure of the measured active material can be obtained. For example, when the composite oxide in the active material-containing layer included in the electrode construct according to the first approach is measured as described above, the measured composite oxide would be found to include a composite oxide having an orthorhombic structure. In addition, by performing the above-described measurement, the symmetry of the crystal structure model for the measurement sample, such as the space group, can be deemed whether appropriate or not.

### <Method for Examining Composition of Composite Oxide in Active Material-Containing Layer and Composition of Material of Sodium Ion-Blocking Layer>

The composition of the composite oxide in the active material, and composition of the material of the sodium ion-blocking layer can be analyzed using Inductively Coupled Plasma (ICP) emission spectrometry, for example. In this case, the abundance ratios of elements depend on the sensitivity of the analyzing device used. Therefore, when the composition of the composite oxide (sodium-containing titanium composite oxide) included in an example of the electrode construct according to the first approach is analyzed using ICP emission spectrometry, for example, the numerical values may deviate from the previously described element ratios due to errors of the measuring device. However, even if the measurement results deviate as described above within the error range of the analyzing device, the example of the electrode construct according to the first approach can sufficiently exhibit the previously described effects.

In order to measure by ICP emission spectrometry, the composition of the materials in each layer (active material-containing layer and sodium ion-blocking layer) of an electrode construct assembled into a battery, the following procedure is specifically performed.

First, according to the previously described procedure, an electrode including the target electrode construct to be measured is taken out from a secondary battery, and washed. The washed electrode is put in a suitable solvent, and irradiated with an ultrasonic wave. For example, an electrode is put into ethyl methyl carbonate in a glass beaker, and the glass beaker is vibrated in an ultrasonic washing machine, and thereby an electrode construct including the active material-containing layer and the sodium ion-blocking layer can be separated from a current collector.

Next, the separated electrode construct including the active material-containing layer and the sodium ion-blocking layer is dried under reduced pressure. The obtained electrode construct is ground for example in a mortar to provide a powder including the target active material, electro-conductive agent, binder, and material of the sodium ion-blocking layer.

Next, centrifugal separation is executed to separate the active material and the material of the sodium ion-blocking layer. At this time, if the electrode active material and the material of the sodium ion-blocking layer have close specific weights and can hardly be separated, instead of grinding the electrode construct including the active material-containing layer and the sodium ion-blocking layer, just the sodium ion-blocking layer on the surface of the active material-containing layer may be scraped off by, for example, SAICAS (Surface and Inter-facial Cutting Analysis System) (registered trademark), thereby separating the materials.

By dissolving the separated powder in an acid, a liquid sample including the active material, and a liquid sample including the material of sodium ion-blocking layer can be prepared. Here, hydrochloric acid, nitric acid, sulfuric acid, and hydrogen fluoride may be used as the acid. The composition of components in the active material (for example, the sodium-containing titanium composite oxide) and composition of components in the sodium ion-blocking layer (monoclinic titanium dioxide) can be found by respectively subjecting the liquid samples to ICP emission spectrometric analysis.

### <Method of Examining Na Ion Concentration near Contact Interface between Active Material-Containing Layer and Sodium Ion-Blocking Layer>

To check that the Na ion concentration is high at the contact interface between the active material-containing layer and the sodium ion-blocking layer, for example, in-situ type SEM (Scanning Electron Microscopy) and EDX (Energy Dispersive X-ray Spectroscopy) are used. First, the joint section between the active material-containing layer and the sodium ion-blocking layer in the electrode construct of the measurement target is processed by an FIB (Focused Ion Beam), and Na element mapping of EDX on this interface is executed. At this time, a region to a depth of 500 nm from the contact interface in a direction orthogonal to the contact interface between the active material containing layer and the sodium ion-blocking layer toward the active material-containing layer side preferably includes a region where the Na ion concentration is higher than in other regions.

It can also be checked by the same method that the Na ion concentration is high at the contact interface between an active material particle and a particle of the Na ion-blocking layer material. When Na element mapping of EDX is executed on the interface between the active material-containing layer and the Na ion-blocking layer, a region to a depth of 500 nm from the active material particle surface in a direction orthogonal to the contact interface between the active material particle and the particle of the sodium ion-blocking layer material toward the active material particle side preferably includes a region where the Na ion concentration is high.

### <Measurement of Weight per Unit Area and Density of Active Material-Containing Layer and Sodium Ion-Blocking Layer>

The weight per unit area of each of the active material-containing layer and the sodium ion-blocking layer can be measured, for example, in the following way.

First, an electrode including an electrode construct that has undergone the above-described pre-treatment is cut into a predetermined electrode area S, and a total weight Wₜₒₜₐₗ is measured. The thickness d_{block} of the sodium ion-blocking layer is examined by cross-sectional SEM, and the sodium ion-blocking layer is scraped off by surface abrasion. At this time, caution is taken to perform scraping abrasion within an error range of 5% with respect to the thickness of the sodium ion-blocking layer.

A total weight W' of the electrode without the sodium ion-blocking layer is measured, and Wₜₒₜₐₗ - W' is divided by the electrode area S, thereby obtaining M_{block} = (Wₜₒₜₐₗ -W')/S. Next, the electrode without the sodium ion-blocking layer is immersed in N-methylpyrrolidone or pure water, and an ultrasonic wave is applied to separate the active material-containing layer and the current collector. The obtained current collector is dried, and a weight W_{cu} is obtained. Using this, M_{AL} = (W' - W_{cu})/S can be calculated.

If a solid electrolyte film is formed on the active material-containing layer, first, the solid electrolyte layer portion is removed by scraping abrasion. The same procedure as described above is performed subsequently, thereby obtaining the weight per unit area.

To obtain the density, first, the thickness d_{AL} of the active material-containing layer and the thickness d_{block} of the sodium ion-blocking layer are obtained by cross-sectional SEM. The density of the active material-containing layer can be calculated by D_{AL} = M_{AL}/(S × d_{AL}). The density of the sodium ion-blocking layer can be calculated by D_{block} = M_{block}/ (S × d_{block}).

### <Measurement of pH and Measurement of Specific Surface Area>

The pH of the composite oxide contained in the active material-containing layer of electrode construct according to the approach mean those measured based on the cold extraction method of JIS K 5101-17-2: 2004. More specifically, the composite oxide is used as a measurement sample, and the pH of the measurement sample is obtained in the following manner.

First, 1 g of measurement sample is put in 50 g of distilled water and vigorously shaken for 1 min. After the measurement sample is left standing for 5 min, the pH of the aqueous solvent is measured using a pH meter, and determined as the value of the pH of the measurement sample.

Note that the pH of the measurement sample may change in accordance with the specific surface area. That is, even if the same measurement sample is used, the specific surface area may be different depending on a difference in the size of the measurement sample upon measurement, and as a result, a different pH may be exhibited for each sample.

In the approach, with regard to the composite oxide contained in the active material-containing layer, a pH within the above-described range (from 10.5 to 12) is preferably exhibited in measurement when the specific surface area (a specific surface area that does not include any carbon coating layer) is equal to or greater than 0.5 m²/g and less than 50 m²/g. More preferably, a pH within the above-described range is exhibited in measurement when the specific surface area of the composite oxide is from 3 m²/g to 30 m²/g. Note that in the approach, a pH outside the above-described pH range may be exhibited if the specific surface area of the composite oxide falls outside the range of 0.5 m²/g or greater and less than 50 m²/g, or the range of from 3 m²/g to 30 m²/g.

The electrode construct according to the first approach includes an active material-containing layer and a sodium ion-blocking layer. The active material-containing layer contains a sodium-containing titanium composite oxide having a crystal structure belonging to the space group Cmca, a crystal structure belonging to the space group Fmmm, or a crystal structure in which a crystal structure belonging to the space group Cmca and a crystal structure belonging to the space group Fmmm coexist. The sodium ion-blocking layer contains a material that does not let sodium ions pass. The electrode construct can implement a secondary battery capable of exhibiting a high energy density, that has excellent output performance and life performance at a high temperature.

### (Second Approach)

According to a second approach, there is provided a secondary battery including a negative electrode, a positive electrode, and an electrolyte. As the negative electrode, the secondary battery includes an electrode that includes the electrode construct according to the first approach.

The secondary battery according to the second approach may further include a separator provided between the positive electrode and the negative electrode. The negative electrode, the positive electrode, and the separator can structure an electrode group. The electrolyte may be held in the electrode group.

The secondary battery according to the second approach may further include a container member that houses the electrode group and the electrolyte.

The secondary battery according to the second approach may further include a negative electrode terminal electrically connected to the negative electrode and a positive electrode terminal electrically connected to the positive electrode.

The secondary battery according to the second approach may be, for example, a lithium secondary battery. The secondary battery also includes nonaqueous electrolyte secondary batteries containing nonaqueous electrolyte(s).

Hereinafter, the negative electrode, the positive electrode, the electrolyte, the separator, the container member, the negative electrode terminal, and the positive electrode terminal will be described in detail.

### 1) Negative Electrode

The negative electrode may include an electrode construct, and a negative electrode current collector stacked onto a face of the active material-containing layer of the electrode construct, which does not have the sodium ion-blocking layer formed thereon. The active material-containing layer of the negative electrode may include a negative electrode active material, and optionally an electro-conductive agent and a binder.

The negative electrode active material includes a sodium-containing titanium composite oxide having a crystal structure belonging to a space group Cmca or space group Fmmm.

The negative electrode including the electrode construct according to the first approach can be stably charged and discharged even at a high temperature of 45°C or more within a potential range of from 1.45 V (vs. Li/Li⁺) to 1.0 V (vs. Li/Li⁺). For this reason, the secondary battery according to the second approach including such a negative electrode can exhibit a high energy density and obtain excellent life performance even at a high temperature of 45°C or more.

In the negative electrode, the sodium-containing titanium composite oxide may be used alone as the negative electrode active material. Alternatively, a mixture where the sodium-containing titanium composite oxide is further mixed with one kind or two or more kinds of other active materials may be used as the negative electrode active material. Examples of other active materials include lithium titanate having a ramsdellite structure (e.g., Li₂Ti₃O₇), lithium titanate having a spinel structure (e.g., Li₄Ti₅O₁₂), monoclinic titanium dioxide (TiO₂), anatase type titanium dioxide, rutile type titanium dioxide, a hollandite type titanium composite oxide, and a monoclinic niobium titanium composite oxide (e.g., Nb₂TiO₇).

The electro-conductive agent is added to improve a current collection performance and to suppress the contact resistance between the negative electrode active material and the current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. Alternatively, instead of using an electro-conductive agent, a carbon coating or an electro-conductive inorganic material coating may be applied to the surface of the negative electrode active material particle.

The binder is added to fill gaps among the dispersed negative electrode active material and also to bind the negative electrode active material with the negative electrode current collector. Examples of the binder include polytetrafluoroethylene (PTFE), polyvinylidene fluoride (PVdF), fluorine rubber, styrene-butadiene rubber, polyacrylate compounds, and imide compounds. One of these may be used as the binder, or two or more may be used in combination as the binder.

The active material, electro-conductive agent and binder in the negative electrode active material-containing layer are preferably blended in proportions of 68% by mass to 96% by mass, 2% by mass to 30% by mass, and 2% by mass to 30% by mass, respectively. When the amount of electro-conductive agent is 2% by mass or more, the current collection performance of the negative electrode active material-containing layer can be improved. When the amount of binder is 2% by mass or more, binding between the negative electrode active material-containing layer and negative electrode current collector is sufficient, and excellent cycling performances can be expected. On the other hand, an amount of each of the electro-conductive agent and binder is preferably 28% by mass or less, in view of increasing the capacity.

As the negative electrode current collector, a material which is electrochemically stable at the lithium insertion and extraction potential (vs. Li/Li⁺) of the negative electrode active material is used. The negative electrode current collector is preferably made of copper, nickel, stainless steel, aluminum, or an aluminum alloy including one or more elements selected from the group consisting of Mg, Ti, Zn, Mn, Fe, Cu, and Si. The thickness of the negative electrode current collector is preferably from 5 µm to 20 µm. The negative electrode current collector having such a thickness can maintain balance between the strength and weight reduction of the negative electrode.

The density of the negative electrode active material-containing layer (excluding the current collector) is preferably from 1.8 g/cm³ to 2.8 g/cm³. The negative electrode, in which the density of the negative electrode active material-containing layer is within this range, is excellent in energy density and ability to hold the electrolyte. The density of the negative electrode active material-containing layer is more preferably from 2.1 g/cm³ to 2.6 g/cm³.

The negative electrode can be produced by, for example, the following method. First, a negative electrode active material, an electro-conductive agent, and a binder are suspended in a solvent to prepare a slurry. The slurry is applied onto one surface or both of reverse surfaces of the negative electrode current collector. Then, the applied slurry is dried to obtain a layered stack of a negative electrode active material-containing layer and a negative electrode current collector. After that, the layered stack is pressed as needed. Then, a slurry containing the material of the sodium ion-blocking layer and a binder is applied onto the negative electrode active material-containing layer. The coat is dried, and then by subjecting to pressing, a negative electrode is obtained. Alternatively, the negative electrode may be produced by the following method. First, a negative electrode active material, an electro-conductive agent, and a binder are mixed to obtain a mixture. The mixture is formed into pellets. Next, the pellets are disposed on the negative electrode current collector. After that, a slurry containing the material of the sodium ion-blocking layer and a binder is applied onto the negative electrode active material-containing layer (the pellets). The coat is dried, and then by subjecting to pressing, a negative electrode is obtained.

### 2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may include one kind of positive electrode active material, or alternatively, include two or more kinds of positive electrode active materials. Examples of the oxide and sulfide include compounds capable of having Li (lithium) and Li ions be inserted and extracted.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and LiₓCoPO₄; 0 < x ≤ 1), iron sulfates [Fe₂(SO₄)₃], vanadium oxides (e.g., V₂O₅), and lithium nickel cobalt manganese composite oxides (LiNi_{1-x-y}CoₓMn_{y}O₂; 0 < x < 1, 0 < y < 1, x + y < 1). As the active material, one of these compounds may be used singly, or plural compounds may be used in combination.

More preferred examples of the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiNi_{1-y}Co_{y}O₂; 0 < x ≤ 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiNi_{1-x-y}CoₓMn_{y}O₂; 0 < x < 1, 0 < y < 1, x + y < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 µm. The positive electrode active material having a primary particle size of 100 nm or more is easy to handle during industrial production. In the positive electrode active material having a primary particle size of 1 µm or less, diffusion of lithium ions within solid can proceed smoothly.

The specific surface area of the positive electrode active material is preferably from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, and imide compounds. One of these may be used as the binder, or two or more may be used in combination as the binder.

The electro-conductive agent is added to improve a current collection performance and to suppress the contact resistance between the positive electrode active material and the positive electrode current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. When the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of a electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode may be produced by the following method, for example. First, a positive electrode active material, an electro-conductive agent, and a binder are suspended in a solvent to prepare a slurry. The slurry is applied onto one surface or both of reverse surfaces of a positive electrode current collector. Next, the applied slurry is dried to form a layered stack of the positive electrode active material-containing layer and the positive electrode current collector. Then, the layered stack is subjected to pressing. The positive electrode can be produced in this manner. Alternatively, the positive electrode may also be produced by the following method. First, a positive electrode active material, an electro-conductive agent, and a binder are mixed to obtain a mixture. Next, the mixture is formed into pellets. Then the positive electrode can be obtained by arranging the pellets on the positive electrode current collector.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, or an inorganic solid electrolyte may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries, such as a nonaqueous electrolyte battery, is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

### 4) Separator

The separator may be made of, for example, a porous film or synthetic resin nonwoven fabric including polyethylene, polypropylene, cellulose, or polyvinylidene fluoride (PVdF). In view of safety, a porous film made of polyethylene or polypropylene is preferred. This is because such a porous film melts at a fixed temperature and thus able to shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 1 % by mass or less.

The shape of the container member is not particularly limited. The shape of the container member may be, for example, flat (thin), square, cylinder, coin, or button-shaped. Depending on battery size, the container member may be, for example, a container member for compact batteries installed in mobile electronic devices, or container member for large batteries installed on vehicles such as two-wheeled to four-wheeled automobiles and railway cars.

### 6) Negative electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### 7) Positive Electrode Terminal

The positive electrode terminal may be made of, for example, a material that is electrically stable in the potential range of 3 V to 5 V (vs. Li/Li⁺) relative to the oxidation-and-reduction potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the second approach will be more specifically described with reference to the drawings.

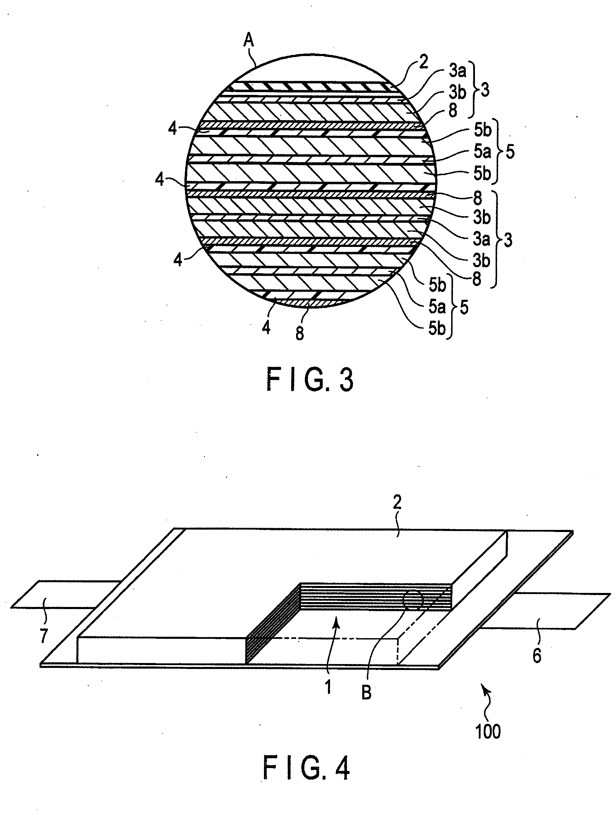

FIG. 2 is a cross-sectional view schematically showing an example of a secondary battery according to the second approach. FIG. 3 is an enlarged cross-sectional view of section A of the secondary battery shown in FIG. 2.

The secondary battery 100 shown in FIGS. 2 and 3 includes a bag-shaped container member 2 shown in FIG. 2, an electrode group 1 shown in FIGS. 2 and 3, and an electrolyte, which is not shown. The electrode group 1 and the electrolyte are housed in the container member 2. The electrolyte (not shown) is held in the electrode group 1.

The bag-shaped container member 2 is made of a laminate film including two resin layers and a metal layer sandwiched between the resin layers.

As shown in FIG. 2, the electrode group 1 is a wound electrode group in a flat form. The wound electrode group 1 in a flat form includes a negative electrode 3, a separator 4, and a positive electrode 5, as shown in FIG. 3. The separator 4 is sandwiched between the negative electrode 3 and the positive electrode 5.

The negative electrode 3 includes a negative electrode current collector 3a, a negative electrode active material-containing layer 3b, and a sodium ion-blocking layer 8. The negative electrode active material-containing layer 3b contains a sodium-containing titanium composite oxide. At the portion of the negative electrode 3 positioned outermost among the wound electrode group 1, the negative electrode active material-containing layer 3b and sodium ion-blocking layer 8 are formed only on an inner surface of the negative electrode current collector 3a, as shown in FIG. 3. For the other portions of the negative electrode 3, negative electrode active material-containing layers 3b and sodium ion-blocking layers 8 are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 2, a negative electrode terminal 6 and positive electrode terminal 7 are positioned in vicinity of the outer peripheral edge of the wound electrode group 1. The negative electrode terminal 6 is connected to a portion of the negative electrode current collector 3a of the negative electrode 3 positioned outermost. The positive electrode terminal 7 is connected to the positive electrode current collector 5a of the positive electrode 5 positioned outermost. The negative electrode terminal 6 and the positive electrode terminal 7 extend out from an opening of the bag-shaped container member 2. The bag-shaped container member 2 is heat-sealed by a thermoplastic resin layer arranged on the interior thereof.

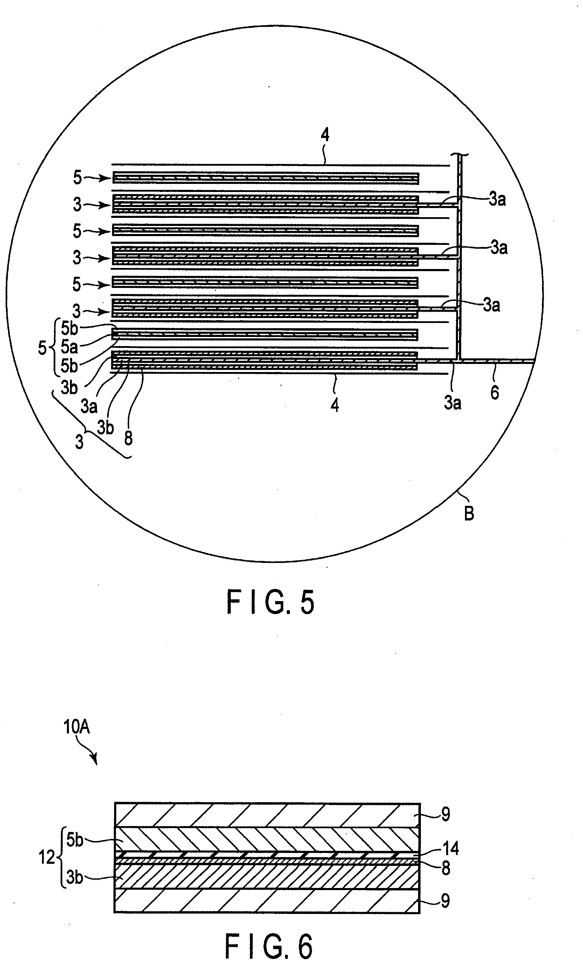

The secondary battery according to the second approach is not limited to the secondary battery of the structure shown in FIGS. 2 and 3, and may be, for example, a battery of a structure as shown in FIGS. 4 and 5.

FIG. 4 is a partially cut-out perspective view schematically showing another example of a secondary battery according to the second approach. FIG. 5 is an enlarged cross-sectional view of section B of the secondary battery shown in FIG. 4.

The secondary battery 100 shown in FIGS. 4 and 5 includes an electrode group 1 shown in FIGS. 4 and 5, a container member 2 shown in FIG. 4, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 5, the electrode group 1 is a stacked electrode group. The stacked electrode group 1 has a structure in which positive electrodes 5 and negative electrodes 3 are alternately stacked with separator(s) 4 sandwiched therebetween.

The electrode group 1 includes plural positive electrodes 5. Each of the plural positive electrodes 5 includes a positive electrode current collector 5a, and positive electrode active material-containing layers 5b supported on both of reverse surfaces of the positive electrode current collector 5a. The electrode group 1 includes plural negative electrodes 3. Each of the plural negative electrodes 3 includes a negative electrode current collector 3a, negative electrode active material-containing layers 3b, and sodium ion-blocking layers 8. The negative electrode active material-containing layers 3b and sodium ion-blocking layers 8 are supported, respectively in this order, on both of reverse surfaces of the negative electrode current collector 3a. An end of the negative electrode current collector 3a of each of the negative electrodes 3 protrudes out from the negative electrode 3. The protruded negative electrode current collector 3a is electrically connected to a strip-shaped negative electrode terminal 6. The tip of the strip-shaped negative electrode terminal 6 is extended out from the container member 2. Although not shown in the drawings, an end of each positive electrode current collector 5a of the positive electrodes 5, which is positioned on the side opposite to the protruded end of the negative electrode current collector 3a, protrude out from the positive electrode 5. The positive electrode current collector 5a protruding out from the positive electrode 5 is electrically connected to a strip-shaped positive electrode terminal 7. The tip of the strip-shaped positive electrode terminal 7 is positioned on the opposite side from the negative electrode terminal 6, and extended out from the container member 2.

In addition to the secondary battery with the above-described arrangement, the secondary battery according to the second approach may be a battery including a solid electrolyte as shown in, for example, FIGS. 6, 7, and 8.

The type of the solid electrolyte is not particularly limited as long as it is a solid substance having lithium ion conductivity. As the solid electrolyte, for example, an inorganic solid electrolyte can be used.

As the inorganic solid electrolyte, an inorganic solid electrolyte having a garnet structure is preferably used because it has high Li ion conductivity, a high reduction resistance, and a wide electrochemical window. As the inorganic solid electrolyte having the garnet structure, for example, particles of a compound having a composition represented by the general formula La₅₊ₓAₓLa₃₋ₓM₂O₁₂ (A is one or two selected from the group consisting of Ca, Sr, and Ba, or a combination of Ca, Sr, and Ba, and M is Nb and/or Ta), the general formula Li₃M₂₋ₓL₂O₁₂ (M is Ta and/or Nb, and L is Zr), the general formula Li₇₋₃ₓAlₓLa₃Zr₃O₁₂, or the formula Li₇La₃Zr₂O₁₂ may be used. In the above formulas, x preferably satisfies 0 ≤ x ≤ 0.5. In particular, Li_{6.25}Al_{0.25}La₃Zr₃O₁₂ and Li₇La₃Zr₂O₁₂ can implement excellent discharge performance and excellent cycle life performance because they have high ionic conductivity and are electrochemically stable. These materials also advantageous for being chemically stable against an organic solvent even when atomized.

Alternatively, a perovskite Li ion conductive material having a composition represented by the formula La_{0.56}Li_{0.33}TiO₃ or a glass ceramic electrolyte represented by a structural formula represented by Li_{1+x+y}Ti₂₋ₓAlₓP_{3-y}Si_{y}O₁₂ (for example, x = 0.3, and y = 0.2) that is a NASICON structure may be used in combination with the inorganic solid electrolyte having a garnet structure, or in place thereof.

The average particle size of the inorganic solid electrolyte is preferably 0.01 µm to 10 µm. The average particle size of the inorganic solid electrolyte is more preferably 0.1 µm to 8 µm. Within this range, ionic conductivity in the electrolyte rises.

The above-described nonaqueous electrolyte, a room temperature molten salt (ionic melt) containing lithium ions and a polymeric solid electrolyte may be combined with the solid electrolyte.

An electrode complex of a first example that the secondary battery according to the second approach may include will be described with reference to FIG. 6.

FIG. 6 is a schematic cross-sectional view of the electrode complex of the first example that the secondary battery according to the second approach may include.

An electrode complex 10A shown in FIG. 6 includes the positive electrode active material-containing layer 5b, a solid electrolyte layer 14, the negative electrode active material-containing layer 3b, a sodium ion-blocking layer 8, and two current collectors 9. As shown in FIG. 6, in the electrode complex 10A, the solid electrolyte layer 14 is located between the positive electrode active material-containing layer 5b and the negative electrode active material-containing layer 3b. The sodium ion-blocking layer 8 is located between the solid electrolyte layer 14 and the negative electrode active material-containing layer 3b, and is in contact with one of the surfaces of the negative electrode active material-containing layer 3b. The surface of the positive electrode active material-containing layer 5b, which does not face the solid electrolyte layer 14, is in contact with one current collector 9. Similarly, the surface of the negative electrode active material-containing layer 3b, which is not in contact with the sodium ion-blocking layer 8, is in contact with the other current collector 9. Thus, the electrode complex 10A has a structure in which one current collector 9, the negative electrode active material-containing layer 3b, the sodium ion-blocking layer 8, the solid electrolyte layer 14, the positive electrode active material-containing layer 5b, and the other current collector 9 are stacked in this order. In other words, the electrode complex 10A shown in FIG. 6 is a single stack electrode complex including one electrode set 12 including the positive electrode active material-containing layer 5b, the negative electrode active material-containing layer 3b with the sodium ion-blocking layer 8 provided on a surface thereof, and the solid electrolyte layer 14 located therebetween.

A bipolar electrode like the electrode complex 10A can be produced, for example, in the following way. First, a negative electrode active material, an electro-conductive agent, and a binder are suspended in a solvent to prepare a slurry. The slurry is applied onto one surface of a current collector. Then, the applied slurry is dried to obtain a layered stack of a negative electrode active material-containing layer and the current collector. Subsequently, a sodium ion-blocking layer is formed on the surface of the negative electrode active material-containing layer by, for example, the above-described method. In addition, a positive electrode active material, an electro-conductive agent, and a binder are suspended in a solvent to prepare a slurry. The slurry is applied onto the other surface of the current collector. Then, the applied slurry is dried to obtain an electrode set in which a sodium ion-blocking layer, a negative electrode active material-containing layer, a current collector, and a positive electrode active material-containing layer are stacked. After that, the electrode set is pressed. A bipolar electrode can thus be obtained.

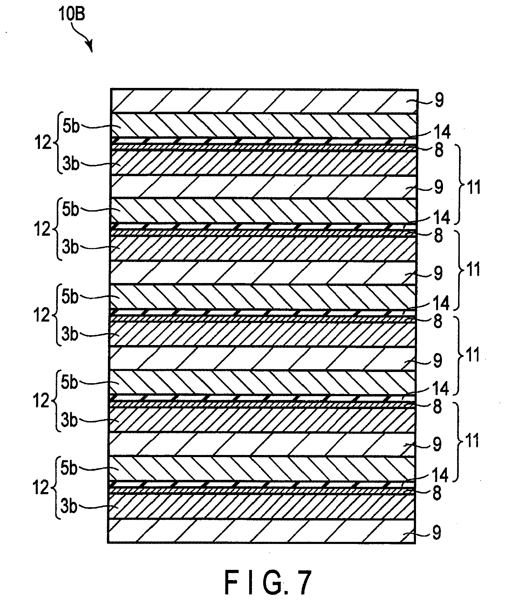

An electrode complex of a second example that the secondary battery according to the second approach may include will be described next with reference to FIG. 7.

FIG. 7 is a schematic cross-sectional view of the electrode complex of the second example that the secondary battery according to the second approach may include.

An electrode complex 10B shown in FIG. 7 includes a plural of, for example, four electrodes 11 each having a bipolar structure. As shown in FIG. 7, each electrode 11 includes the current collector 9, the positive electrode active material-containing layer 5b formed on one surface of the current collector 9, the negative electrode active material-containing layer 3b formed on the other surface of the current collector 9, and the sodium ion-blocking layer 8 formed on the surface of the negative electrode active material-containing layer 3b. In the electrodes 11, as shown in FIG. 7, the positive electrode active material-containing layer 5b of one electrode 11 is disposed so as to face the sodium ion-blocking layer 8 of another electrode 11 with the solid electrolyte layer 14 located therebetween.

The electrode complex 10B further includes, in addition to the electrodes 11, two other solid electrolyte layers 14, two other current collectors 9, one other positive electrode active material-containing layer 5b, one other negative electrode active material-containing layer 3b, and one other sodium ion-blocking layer 8. As shown in FIG. 7, the one positive electrode active material-containing layer 5b faces the sodium ion-blocking layer 8 of the electrode 11 located uppermost in the stack of the electrodes 11 with one of the solid electrolyte layers 14 located therebetween. The surface of this positive electrode active material-containing layer 5b, which is not in contact with the solid electrolyte layer 14, is in contact with one of the current collectors 9. In addition, the one negative electrode active material-containing layer 3b faces the positive electrode active material-containing layer 5b of the electrode 11 located lowermost in the stack of the electrodes 11 with the one sodium ion-blocking layer 8 and one of the solid electrolyte layers 14 located therebetween. The surface of this negative electrode active material-containing layer 3b, which is not in contact with the sodium ion-blocking layer 8, is in contact with one of the current collectors 9.

The electrode complex that the secondary battery according to the second approach may include can be made thin by making the positive electrode active material-containing layer, the solid electrolyte layer, the sodium ion-blocking layer, and the negative electrode active material-containing layer be in tight contact. For this reason, in the secondary battery according to the second approach, there may be stacked a multiple of electrode sets each including a positive electrode active material-containing layer, a negative electrode active material-containing layer, and a solid electrolyte layer and a sodium ion-blocking layer located therebetween. It is therefore possible to provide a thin secondary battery that has a high volumetric efficiency and a large capacity, can exhibit high energy density, and has excellent output performance and life performance at a high temperature. Note that the electrode complex 10B of the example shown in FIG. 7 includes five electrode sets 12 each including the positive electrode active material-containing layer 5b, the negative electrode active material-containing layer 3b, and the solid electrolyte layer 14 and the sodium ion-blocking layer 8 located therebetween. However, the number of electrode sets 12 can appropriately be selected based on the design of the shape and size of the battery.

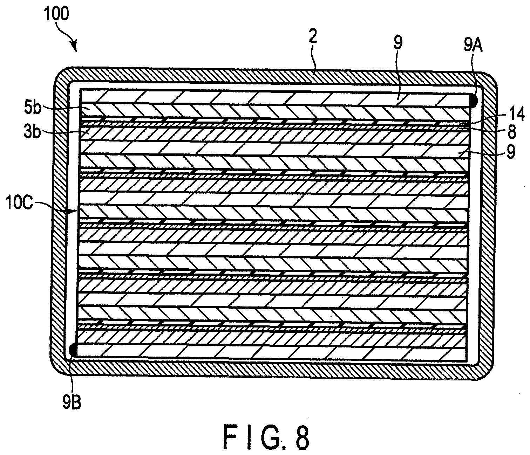

FIG. 8 is a schematic cross-sectional view of the secondary battery of an example according to the approach.

As shown in FIG. 8, a secondary battery 100 includes an electrode complex 10C housed in a container member 2. The electrode complex 10C shown in FIG. 8 has the same structure as the electrode complex 10B shown in FIG. 7. A positive electrode tab 9A is provided at one end of the current collector 9 located uppermost in the electrode complex 10C. On the other hand, a negative electrode tab 9B is provided at the other end of the current collector 9 located lowermost in the electrode complex 10C. A negative electrode terminal and a positive electrode terminal (neither are shown) are connected to the positive electrode tab 9A and the negative electrode tab 9B, respectively, and the negative electrode terminal and the positive electrode terminal extend to the outside of the container member 2.

FIG. 8 shows, as an example, the secondary battery 100 including the electrode complex 10C that includes five electrode sets each including the positive electrode active material-containing layer 5b, the negative electrode active material-containing layer 3b, and the solid electrolyte layer 14 and the sodium ion-blocking layer 8 located therebetween, like the electrode complex 10B shown in FIG. 7. However, the secondary battery according to the second approach may include an electrode complex including electrode sets in a number other than five, for example, one electrode set, like the electrode complex 10A shown in FIG. 6, or an electrode complex including two or more electrode sets.

The secondary battery according to the second approach includes the electrode including the electrode construct according to the first approach. Thus, the secondary battery according to the second approach can exhibit a high energy density and a high battery voltage, while being able to exhibit excellent output performance and high temperature life performance.

In addition, when the secondary battery is, for example, combined with a 12 V lead storage battery for automobiles to thereby configure a motor assist type hybrid car or an idling stop system (a.k.a., automatic start-stop system), it is possible to design a setting of battery pack potential that is capable of preventing over-discharge of a lead storage battery upon a high load or is capable of adapting to a fluctuation in potential upon an input of regenerative energy. This is because, a voltage change corresponding to the charge/discharge state of the secondary battery of the second approach can be obtained, and thus, the state-of-charge (SOC) can be managed based on the voltage change. Accordingly, voltage management is easy, and the secondary battery can be favorably used in a system where the battery is combined with the lead storage battery.

Further, in the case where a spinel lithium titanate (Li₄Ti₅O₁₂) is used for the negative electrode, it is necessary to connect six batteries in series, in order to obtain a voltage compatible with a lead storage battery for automobiles. On the other hand, when a negative electrode active material including a sodium-containing titanium composite oxide is used, the average operating potential of the negative electrode is decreased, and the battery voltage becomes high. Thus, even if the number of in-series connection of the battery cells in the battery pack is changed to five, it is possible to configure a battery pack having high voltage compatibility with 12 V lead storage batteries for automobiles. Namely, the secondary battery according to the second approach is able to provide at low cost, a low resistance small size battery pack with high energy density that is excellent in output performance and life performance at high temperatures.

### (Third Approach)

According to a third approach, a battery module is provided. The battery module according to the third approach includes plural secondary batteries according to the second approach.

In the battery module according to the third approach, each of the single batteries may be arranged electrically connected in series, in parallel, or in a combination of in-series connection and in-parallel connection.

An example of the battery module according to the third approach will be described next with reference to the drawings.

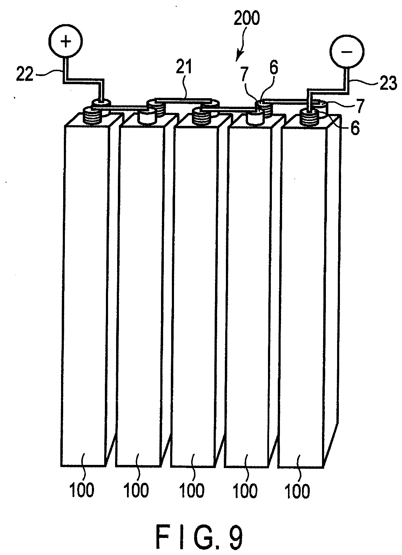

FIG. 9 is a perspective view schematically showing an example of the battery module according to the third approach. A battery module 200 shown in FIG. 9 includes five single-batteries 100, four bus bars 21, a positive electrode-side lead 22, and a negative electrode-side lead 23. Each of the five single-batteries 100 is a secondary battery according to the second approach.

Each bus bar 21 connects a negative electrode terminal 6 of one single-battery 100 and a positive electrode terminal 7 of the single-battery 100 positioned adjacent. The five single-batteries 100 are thus connected in series by the four bus bars 21. That is, the battery module 200 shown in FIG. 9 is a battery module of five in-series connection.

As shown in FIG. 9, the positive electrode terminal 7 of the single-battery 100 located at one end on the left among the row of the five single-batteries 100 is connected to the positive electrode-side lead 22 for external connection. In addition, the negative electrode terminal 6 of the single-battery 100 located at the other end on the right among the row of the five single-batteries 100 is connected to the negative electrode-side lead 23 for external connection.

The battery module according to the third approach includes the secondary battery according to the second approach. Hence, the battery module can exhibit a high energy density and is excellent in output performance and life performance at a high temperature.

### (Fourth Approach)

According to a fourth approach, a battery pack is provided. The battery pack includes a battery module according to the third approach. The battery pack may include a single secondary battery according to the second approach, in place of the battery module according to the third approach.

The battery pack according to the fourth approach may further include a protective circuit. The protective circuit has a function to control charging and discharging of the secondary battery. Alternatively, a circuit included in equipment where the battery pack serves as a power source (for example, electronic devices or vehicles) may be used as the protective circuit for the battery pack.

Moreover, the battery pack according to the fourth approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the fourth approach will be described with reference to the drawings.

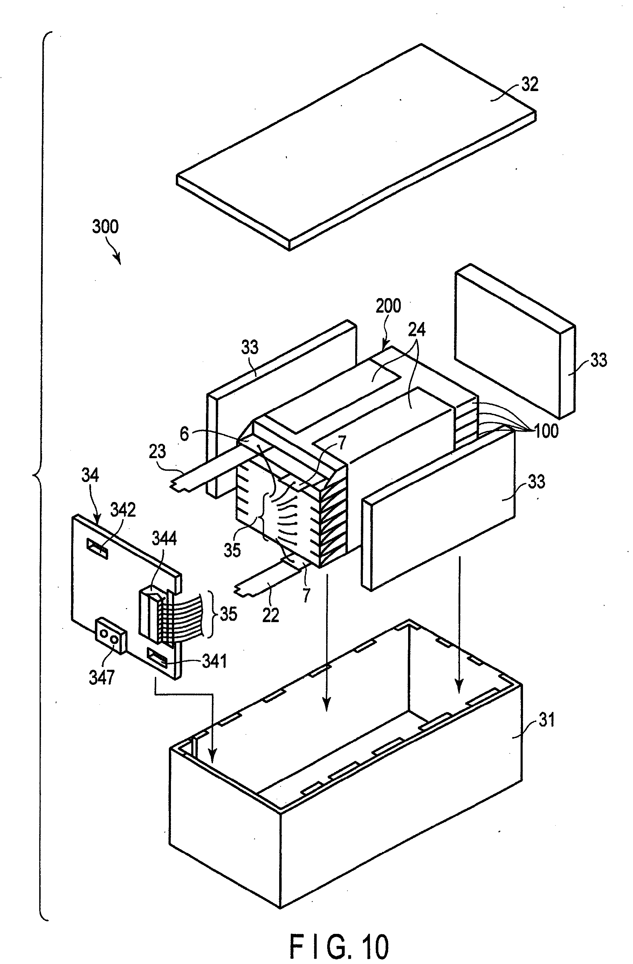

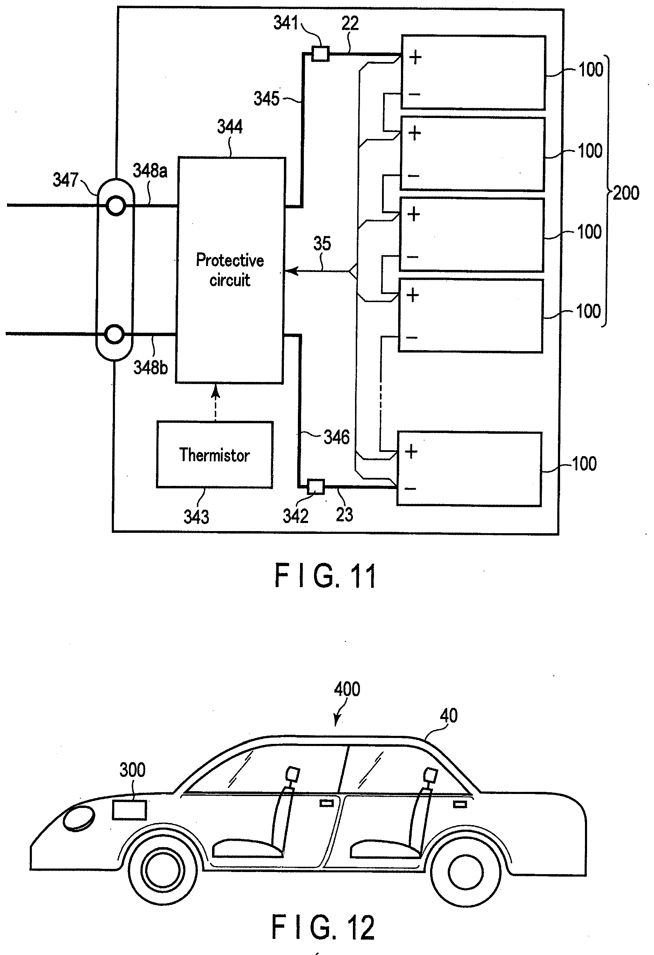

FIG. 10 is an exploded perspective view schematically showing an example of the battery pack according to the fourth approach. FIG. 11 is a block diagram showing an example of an electric circuit of the battery pack shown in FIG. 10.

A battery pack 300 shown in FIGS. 10 and 11 includes a housing container 31, a lid 32, protective sheets 33, a battery module 200, a printed wiring board 34, wires 35, and an insulating plate (not shown).

The housing container 31 is configured to house the protective sheets 33, the battery module 200, the printed wiring board 34, and the wires 35. The lid 32 covers the housing container 31 to house the battery module 200. Although not shown, opening(s) or connection terminal(s) for connecting to external device(s) are provided on the housing container 31 and lid 32.

The protective sheets 33 are arranged on both inner surfaces of the housing container 31 along the long-side direction and on the inner surface along the short-side direction facing the printed wiring board 34 across the battery module 200 positioned therebetween. The protective sheets 33 are made of, for example, resin or rubber.

The battery module 200 includes plural single-batteries 100, a positive electrode-side lead 22, a negative electrode-side lead 23, and an adhesive tape 24. The battery module 200 may alternatively include only one single-battery 100.

A single-battery 100, for example, has a structure shown in FIGS. 2 and 3. At least one of the plural single-batteries 100 is a secondary battery according to the second approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 11. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 24 fastens the plural single-batteries 100. The plural single-batteries 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through hole. By inserting the other end of the positive electrode-side lead 22 into the though hole, the positive electrode-side connector 341 and the positive electrode-side lead 22 become electrically connected. The negative electrode-side connector 342 is provided with a through hole. By inserting the other end of the negative electrode-side lead 23 into the though hole, the negative electrode-side connector 342 and the negative electrode-side lead 23 become electrically connected.

The thermistor 343 is fixed to one principal surface of the printed wiring board 34. The thermistor 343 detects the temperature of each single-battery 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective circuit 344 controls charge and discharge of the plural single-batteries 100. The protective circuit 344 is also configured to cut-off electric connection between the protective circuit 344 and the external power distribution terminal 347 to external device(s), based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 344, a circuit included in a device (for example, an electronic device or an automobile) that uses the battery pack 300 as a power source may be used.

Such a battery pack 300 is used, for example, in applications where excellent cycle performance is demanded when a large current is extracted. More specifically, the battery pack 300 is used as, for example, a power source for electronic devices, a stationary battery, an onboard battery for vehicles, or a battery for railway cars. An example of the electronic device is a digital camera. The battery pack 300 is particularly favorably used as an onboard battery.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

The battery pack according to the fourth approach includes the secondary battery according to the second approach or the battery module according to the third approach. Hence, the battery pack can exhibit a high energy density and is excellent in output performance and life performance at a high temperature.

In addition, since the secondary battery according to the second approach is included, a voltage change corresponding to the charge-and-discharge state of the battery pack can be obtained. It is therefore possible to manage the SOC (State Of Charge) of the battery pack based on voltage change, and thus, voltage management is easy.

### (Fifth Approach)

According to a fifth approach, a vehicle is provided. The battery pack according to the fourth approach is installed on this vehicle.

In the vehicle according to the fifth approach, the battery pack is configured, for example, to recover regenerative energy from motive force of the vehicle.

Examples of the vehicle according to the fifth approach include two-wheeled to four-wheeled hybrid electric automobiles, two-wheeled to four-wheeled electric automobiles, electric assist bicycles, and railway cars.

In the vehicle according to the fifth approach, the installing position of the battery pack is not particularly limited. For example, the battery pack may be installed in the engine compartment of the vehicle, in rear parts of the vehicle, or under seats.

An example of the vehicle according to the fifth approach is explained below, with reference to the drawings.

FIG. 12 is a cross-sectional view schematically showing an example of a vehicle according to the fifth approach.

A vehicle 400, shown in FIG. 12 includes a vehicle body 40 and a battery pack 300 according to the fourth approach.

In FIG. 12, the vehicle 400 is a four-wheeled automobile. As the vehicle 400, for example, two-wheeled to four-wheeled hybrid electric automobiles, two-wheeled to four-wheeled electric automobiles, electric assist bicycles, and railway cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy of motive force of the vehicle 400.

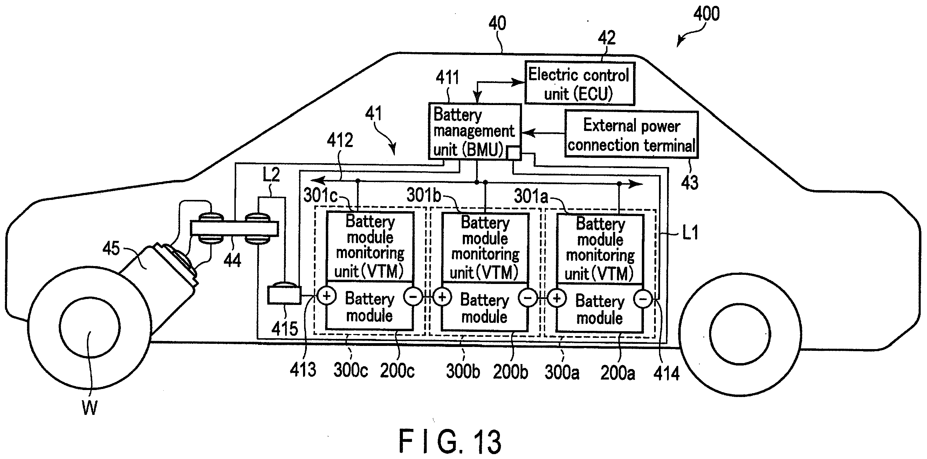

Next, with reference to FIG. 13, an aspect of operation of the vehicle according to the fifth approach is explained.

FIG. 13 is a view schematically showing another example of the vehicle according to the fifth approach. A vehicle 400, shown in FIG. 13, is an electric automobile.

The vehicle 400, shown in FIG. 13, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 13, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit (VTM: voltage temperature monitoring) 301a. The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 13) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fifth approach includes the battery pack according to the fourth approach. Hence, since the battery pack exhibits a high energy density and excellent output performance, a high-performance vehicle can be provided. Additionally, since the battery pack exhibits excellent high-temperature life performance, the reliability of the vehicle is high.

### [Examples]

The approaches will be described below in more detail based on examples.

### (Example 1)

In Example 1, a beaker cell of Example 1 was produced in accordance with the following procedure.

### <Preparation of Active Material>

For the purpose of obtaining a composition shown in Table 1, lithium carbonate (Li₂CO₃), sodium carbonate (Na₂CO₃), and titanium dioxide (TiO₂) having an anatase structure were mixed at a mole fraction of 1 : 1 : 6, as shown in Table 2. The mixture was pre-calcined in a muffle furnace at 650°C for 2 hours and at 800°C for 12 hours. Next, the pre-calcined product was ground by a grinder to resolve agglomeration.

Next, main calcination was performed by heating the pre-calcined product to 900°C for 12 hours in the muffle furnace. After the calcination, the product was immediately take out from the furnace and put in liquid nitrogen for rapid cooling, thereby obtaining the active material of Example 1.

It was found by the above-described powder X-ray diffraction that the obtained active material of Example 1 was a sodium-containing titanium composite oxide having a crystal structure belonging to the space group Fmmm and represented by the general formula Li₂Na₂Ti₆O₁₄, as shown in Table 4.

The pH of the active material of Example 1 was measured by the above-described method. As a result, the pH of the active material of Example 1 was 11.6.

### <Production of Electrode>

The active material of Example 1, acetylene black serving as an electro-conductive agent, and polyvinylidene fluoride (PVdF) serving as a binder were added to N-methyl-pyrrolidone (NMP) and mixed to prepare a slurry. At this time, the mass ratio of the active material, acetylene black, and PVdF was set to 90 : 5 : 5. The slurry was applied onto one surface of a current collector made of an aluminum foil having a thickness of 12 µm and dried to obtain an active material-containing layer. After that, by subjecting to pressing, obtained was an electrode having an active material-containing layer thickness of 25 µm, an electrode density (without including the current collector) of 2.2 g/cm³, and a weight per unit area of 88.0 g/m².

### <Production of Na Ion-Blocking Layer>

A monoclinic titanium dioxide used as the material of a sodium ion-blocking layer was synthesized in accordance with the following procedure.

A commercial reagent potassium titanate represented by K₂Ti₄O₉ was used as the starting material. A powder of the potassium titanate was washed well with distilled water and dispersed in an aqueous solution of hydrochloric acid with a concentration of 2 mol/L. The solution was stirred using a magnet stirrer at 25°C for 7 days. At this time, the aqueous hydrochloric acid solution was exchanged with a new one every 24 hours.

Next, the reaction product was washed with distilled water until the pH of the wash water had become 6.5. The product was then filtered and dried, thereby obtaining a proton exchanged product H₂Ti₄O₉ as an intermediate product. Next, the obtained proton exchanged product was heat-treated at 350°C for 2 hours, thereby obtaining a monoclinic titanium dioxide as the target product.

Next, the obtained monoclinic titanium dioxide and PVdF were put in N-methyl-pyrrolidone (NMP) to prepare a slurry. The monoclinic titanium dioxide and the PVdF binder were mixed at a weight ratio of 98 : 2 to set a solid content ratio of 60%. The thus obtained slurry was applied onto the surface of the active material-containing layer of the electrode of Example 1 such that the Na ion-blocking layer had a thickness of 3 µm and a weight per unit area of 2.0 g/m². NMP was then evaporated from the coat. The Na ion-blocking layer was thus disposed on the surface of the active material-containing layer. An electrode including an electrode construct in which the ratio M_{block}/M_{AL} of the weights per unit area was 0.025, and the thickness ratio d_{block}/d_{AL} was 0.12, as shown in Table 5, was thus obtained.

### <Specific Surface Area Ratio>

A specific surface area S_{oxide} of the active material (composite oxide) and a specific surface area S_{block} of the particles used in the Na ion-blocking layer were measured by the above-described method. As a result, the specific surface area ratio in the electrode of Example 1 was 0.17, as shown in Table 5.

### <Average Particle Size>

As a result of examining by SEM, the active material of Example 1 had a single particle form. The average particle size of the active material of Example 1 was measured in accordance with the above-described procedure. As the obtained result, the average primary particle size of the active material of Example 1 was 0.85 µm.

### <Preparation of Nonaqueous Electrolyte>

Ethylene carbonate (EC) and diethyl carbonate (DEC) were mixed at a volume ratio of 1 : 2 to form a mixed solvent. LiPF₆ as an electrolyte was dissolved in the mixed solvent at a concentration of 1 M, thereby obtaining a nonaqueous electrolyte.

### <Manufacture of Beaker Cell>

A beaker cell was produced in which the electrode produced above and including an electrode construct was used as a working electrode, a glass filter having a thickness of 1 mm was used as a separator, and metallic lithium was used as a counter electrode and a reference electrode. The above-described liquid nonaqueous electrolyte was put into the beaker cell, thereby completing the beaker cell of Example 1.

### (Examples 2 to 25)

In each of Examples 2 to 23, synthesized as the active material were composite oxides where various kinds of elements or vacancies were introduced to a sodium-containing titanium composite oxide represented by the general formula Li₂₊ₐM1_{2-b}Ti_{6-c}M2_{d}O_{14+δ}. The synthesis was performed in accordance with the same procedure as in Example 1 except that a raw material mixing ratio shown in Tables 2 and 3 was used to obtain a composition shown in Table 1.

In Example 24, the active material obtained in Example 1 was heated at 800°C for 1 hour in a reducing atmosphere while flowing nitrogen gas containing hydrogen at 3%, thereby reducing a part of oxide ions. A composite oxide having a composition shown in Table 1 was thus synthesized to obtain an active material of Example 24.

In Example 25, to insert Li ions into the crystal structure sites of the composite oxide, the active material particles obtained in Example 1 were immersed in an aqueous solution of lithium hydroxide at a concentration of 2 M. By reacting at 60°C for 48 hours, Li ions were chemically inserted.

Note that the active material of each of Examples 2 to 25 had a pH of 11.0 to 11.6.

The beaker cell of each of Examples 2 to 25 was produced in accordance with the same procedure as in Example 1 except that the obtained active material was used.

### (Comparative Example 1)

A beaker cell was produced using an electrode produced in accordance with the same procedure as in Example 1 except that no Na ion-blocking layer was formed.

### (Comparative Example 2)

A beaker cell was produced using an electrode produced in accordance with the same procedure as in Example 1 except that in place of a monoclinic titanium dioxide, a spinel-type lithium titanate Li₄Ti₅O₁₂, which is a material into which Na ions are inserted and extracted from, was used for the Na ion-blocking layer.

### (Comparative Example 3)

In Comparative Example 3, first, a composite oxide was synthesized in accordance with the same procedure as in Example 1 using raw materials and a mixing ratio shown in Table 2 such that the composite oxide had a composition Sr₂Ti₆O₁₂, as a compound not containing Na ions.

Using the composite oxide, an electrode was produced as in Example 1, without disposing an Na ion-blocking layer on the active material-containing layer, and the electrode was used to produce a beaker cell.

### (Comparative Example 4)

A beaker cell was produced in accordance with the same procedure as in Comparative Example 3 except that an Na ion-blocking layer containing a monoclinic titanium dioxide was disposed on the active material-containing layer, in the same manner as in Example 1.

Table 1 below shows the composition of a composite oxide synthesized as an active material in each of Examples 1 to 25 and Comparative Examples 1 to 4.

**[Table 1]**

| | Composition of composite oxide | a | b | c | d | δ |
|---|---|---|---|---|---|---|
| Comparative Example 1 | Li₂Na₂Ti₆O₁₄ | 0 | 0 | 0 | 0 | 0 |
| Comparative Example 2 | Li₂Na₂Ti₆O₁₄ | 0 | 0 | 0 | 0 | 0 |
| Comparative Example 3 | Li₂SrTi₆O₁₄ | 0 | 1.0 | 0 | 0 | 0 |
| Comparative Example 4 | Li₂SrTi₆O₁₄ | 0 | 1.0 | 0 | 0 | 0 |
| Example 1 | Li₂Na₂Ti₆O₁₄ | 0 | 0 | 0 | 0 | 0 |
| Example 2 | Li₂Na_{1.5}Ti_{5.5}Nb_{0.5}O₁₄ | 0 | 0.5 | 0.5 | 0.5 | 0 |
| Example 3 | Li₂Na_{1.5}Ti_{5.5}Nb_{0.5}O₁₄ | 0 | 0.5 | 0.5 | 0.5 | 0 |
| Example 4 | Li₂Na_{1.5}Ti_{5.5}Nb_{0.5}O₁₄ | 0 | 0.5 | 0.5 | 0.5 | 0 |
| Example 5 | Li₂Na_{1.5}Ti_{5.5}Nb_{0.5}O₁₄ | 0 | 0.5 | 0.5 | 0.5 | 0 |
| Example 6 | Li₂NaTi₅NbO₁₄ | 0 | 1.0 | 1.0 | 1.0 | 0 |
| Example 7 | Li₂Na_{0.1}Ti_{4.1}Nb_{1.9}O₁₄ | 0 | 1.9 | 1.9 | 1.9 | 0 |
| Example 8 | Li₂Na_{0.5}Ba_{0.3}Ca_{0.15}Mg_{0.05}Ti_{5.5}Nb_{0.5}O₁₄ | 0 | 1.0 | 0.5 | 0.5 | 0 |
| Example 9 | Li₂Sr_{0.25}Na_{0.75}Ti_{5.25}Nb_{0.75}O₁₄ | 0 | 1.0 | 0.75 | 0.75 | 0 |
| Example 10 | Li₂Na_{1.5}Ti₅ (Y_{0.25}Nb_{0.75})O₁₄ | 0 | 0.5 | 1.0 | 1.0 | 0 |
| Example 11 | Li₂Na_{1.5}Ti₅ (Fe_{0.25}Nb_{0.75})O₁₄ | 0 | 0.5 | 1.0 | 1.0 | 0 |
| Example 12 | Li₂Na_{1.5}Ti₅ (Co_{0.25}Nb_{0.75})O₁₄ | 0 | 0.5 | 1.0 | 1.0 | 0 |
| Example 13 | Li₂Na_{1.5}Ti₅ (Cr_{0.25}Nb_{0.75}) O₁₄ | 0 | 0.5 | 1.0 | 1.0 | 0 |
| Example 14 | Li₂Na_{1.5}Ti₅ (Mn_{0.25}Nb_{0.75}) O₁₄ | 0 | 0.5 | 1.0 | 1.0 | 0 |
| Example 15 | Li₂Na_{1.5}Ti₅ (Ni_{0.25}Nb_{0.75}) O₁₄ | 0 | 0.5 | 1.0 | 1.0 | 0 |
| Example 16 | Li₂Na_{1.5}Ti₅ (Al_{0.25}Nb_{0.75})O₁₄ | 0 | 0.5 | 1.5 | 1.5 | 0 |
| Example 17 | Li₂Na_{1.5}Ti_{4.5} (Y_{0.25}Nb_{0.75}Zr_{0.5})O₁₄ | 0 | 0.5 | 1.5 | 1.5 | 0 |
| Example 18 | Li₂Na_{1.5}Ti_{4.5} (Y_{0.25}Nb_{0.75}Sn_{0.5}) O₁₄ | 0 | 0.5 | 1.0 | 1.0 | 0 |
| Example 19 | Li₂Na_{1.5}Ti₅ (Y_{0.25}Nb_{0.65}V_{0.1})O₁₄ | 0 | 0.5 | 1.0 | 1.0 | 0 |
| Example 20 | Li₂Na_{1.5}Ti₅ (Y_{0.25}Nb_{0.65}Ta_{0.1})O₁₄ | 0 | 0.5 | 1.0 | 1.0 | 0 |
| Example 21 | Li₂Na_{1.4}Ti₅ (Y_{0.25}Nb_{0.65}Mo_{0.1})O₁₄ | 0 | 0.6 | 1.0 | 1.0 | 0 |
| Example 22 | Li₂Na_{1.4}Ti₅ (Y_{0.25}Nb_{0.65}W_{0.1})O₁₄ | 0 | 0.6 | 1.0 | 1.0 | 0 |
| Example 23 | Li₂Na_{1.7}K_{0.1}Cs_{0.1}Rb_{0.1}Ti_{0.1}Zr_{5.9}O₁₄ | 0 | 0 | 5.9 | 5.9 | 0 |
| Example 24 | Li₂Na₂Ti₆O_{13.5} | 0 | 0 | 0 | 0 | -0.5 |
| Example 25 | Li₆Na₂Ti₆O₁₄ | 6 | 0 | 0 | 0 | 0 |

Table 2 below shows the starting materials used to synthesize an active material in each of Examples 1 to 10 and Comparative Examples 1 to 4 and the molar ratio of the starting materials, and Table 3 shows the starting materials used in each of Examples 11 to 25 and the molar ratio of the starting materials.

**[Table 2]**

| | Li source / amount | M1 source / amount | Ti source / amount | M2 source / amount |
|---|---|---|---|---|
| Comparative Example 1 | Li₂CO₃ / 1.0 | Na₂CO₃ / 1.0 | TiO₂ / 6.0 | - |
| Comparative Example 2 | Li₂CO₃ / 1.0 | Na₂CO₃ / 1.0 | TiO₂ / 6.0 | - |
| Comparative Example 3 | Li₂CO₃ / 1.0 | SrCO₃ / 1.0 | TiO₂ / 6.0 | - |
| Comparative Example 4 | Li₂CO₃ / 1.0 | SrCO₃ / 1.0 | TiO₂ / 6.0 | - |
| Example 1 | Li₂CO₃ / 1.0 | SrCO₃ / 1.0 | TiO₂ / 6.0 | - |
| Example 2 | Li_{z}C0₃ / 1.0 | Na₂CO₃ / 0.75 | TiO₂ / 5.5 | Nb₂O₅ / 0.25 |
| Example 3 | Li₂CO₃ / 1.0 | Na₂CO₃ / 0.75 | TiO₂ / 5.5 | Nb₂O₅ / 0.25 |
| Example 4 | Li₂CO₃ / 1.0 | Na₂CO₃ / 0.75 | TiO₂ / 5.5 | Nb₂O₅ / 0.25 |
| Example 5 | Li₂CO₃ / 1.0 | Na₂CO₃ / 0.75 | TiO₂ / 5.5 | Nb₂O₅ / 0.25 |
| Example 6 | Li₂CO₃ / 1.0 | Na₂CO₃ / 0.5 | TiO₂ / 5.0 | Nb₂O₅ / 0.5 |
| Example 7 | Li₂CO₃ / 1. 0 | Na₂CO₃ / 0.05 | TiO₂ / 4.1 | Nb₂O₅ / 0.95 |
| Example 8 | Li₂CO₃ / 1.0 | Na₂CO₃ / 0.25 | TiO₂ / 5.5 | Nb₂O₅ / 0.25 |
| | | BaCO₃ / 0.3 | | |
| | | CaCO₃ / 0.15 | | |
| | | MgO / 0.05 | | |
| Example 9 | Li₂CO₃ / 1. 0 | SrCO₃ / 0.25 | TiO₂ / 5.25 | Nb₂O₅ / 0.375 |
| | | Na₂CO₃ / 0.375 | | |
| Example 10 | Li₂CO₃ / 1.0 | Na₂CO₃ / 0.75 | TiO₂ / 5.0 | Nb₂O₅ / 0.375 |
| | | | | Y₂O₃ / 0.125 |

**[Table 3]**

| | Li source / amount | M1 source / amount | Ti source / amount | M2 source / amount |
|---|---|---|---|---|
| Example 11 | Li₂CO₃ / 1. 0 | Na₂CO₃ / 0.75 | TiO₂ / 5.0 | Nb₂O₅ / 0.375 |
| | | | | Fe₂O₃ / 0.125 |
| Example 12 | Li₂CO₃ / 1.0 | Na₂CO₃ / 0.75 | TiO₂ / 5.0 | Nb₂O₅ / 0.375 |
| | | | | Co₂O₃ / 0.125 |
| Example 13 | Li₂CO₃ / 1.0 | Na₂CO₃ / 0.75 | TiO₂ / 5.0 | Nb₂O₅ / 0.375 |
| | | | | Cr₂O₃ / 0.125 |
| Example 14 | Li₂CO₃ / 1. 0 | Na₂CO₃ / 0.75 | TiO₂ / 5.0 | Nb₂O₅ / 0.375 |
| | | | | Mn₂O₃ / 0.125 |
| Example 15 | Li₂CO₃ / 1.0 | Na₂CO₃ / 0.75 | TiO₂ / 5. 0 | Nb₂O₅ / 0.375 |
| | | | | Nio / 0.25 |
| Example 16 | Li₂CO₃ / 1.0 | Na₂CO₃ / 0.75 | TiO₂ / 5.0 | Nb₂O₅ / 0.375 |
| | | | | Al₂O₃ / 0.125 |
| Example 17 | Li₂CO₃ / 1.0 | Na₂CO₃ / 0.75 | TiO₂ / 4.5 | Nb₂O₅ / 0.375 |
| | | | | Y₂O₃ / 0.125 |
| | | | | ZrO₂ / 0.5 |
| Example 18 | Li₂CO₃ / 1.0 | Na₂CO₃ / 0.75 | TiO₂ / 4.5 | Nb₂O₅ / 0.375 |
| | | | | Y₂O₃ / 0.125 |
| | | | | SnO₂ / 0.5 |
| Example 19 | Li₂CO₃ / 1.0 | Na₂CO₃ / 0.75 | TiO₂ 5.0 | Nb₂O₅ / 0.325 |
| | | | | Y₂O₃ / 0.125 |
| | | | | V₂O₅ / 0.05 |
| Example 20 | Li₂CO₃ / 1.0 | Na₂CO₃ / 0.75 | TiO₂ / 5.0 | Nb₂O₅ / 0.325 |
| | | | | Y₂O₃ / 0.125 |
| | | | | Ta₂O₅ / 0.05 |
| Example 21 | Li₂CO₃ / 1.0 | Na₂CO₃ / 0.7 | TiO₂ / 5.0 | Nb₂O₅ / 0.325 |
| | | | | Y₂O₃ / 0.125 |
| | | | | MoO₃ / 0.1 |
| Example 22 | Li₂CO₃ / 1. 0 | Na₂CO₃ / 0.7 | TiO₂ / 5.0 | Nb₂O₅ / 0.325 |
| | | | | Y₂O₃ / 0.125 |
| | | | | WO₃ / 0.1 |
| Example 23 | Li₂CO₃ / 1.0 | Na₂CO₃ / 0.85 | TiO₂ / 0.1 | ZrO₂ / 5. 9 |
| | | K₂CO₃ / 0.05 | | |
| | | Cs₂CO₃ / 0.05 | | |
| | | Rb₂CO₃/0.05 | | |
| Example 24 | Li₂CO₃ / 1.0 | Na₂CO₃ / 1.0 | TiO₂ / 6.0 | - |
| Example 25 | Li₂CO₃ / 1.0 | Na₂CO₃ / 1.0 | TiO₂ / 6.0 | - |

Table 4 shows the crystal phase of the crystal structure of the active material (composite oxide) obtained in each of Examples 1 to 25 and Comparative Examples 1 to 4, the space group to which the crystal structure belongs, the pH of the composite oxide, and the synthesis conditions (the calcination temperature and the calcination time).

**[Table 4]**

| | Crystal phase | Space group | pH of composite oxide | Calcination temperature (°C) | Calcination time (Hr) |
|---|---|---|---|---|---|
| Comparative Example 1 | orthorhombic | Fmmm | 11.5 | 900 | 12 |
| Comparative Example 2 | orthorhombic | Fmmm | 11.5 | 900 | 12 |
| Comparative Example 3 | orthorhombic | Cmca | 10.4 | 900 | 12 |
| Comparative Example 4 | orthorhombic | Cmca | 10.4 | 900 | 12 |
| Example 1 | orthorhombic | Fmmm | 11.6 | 900 | 12 |
| Example 2 | orthorhombic | Fmmm | 11.3 | 900 | 12 |
| Example 3 | orthorhombic | Fmmm | 11.3 | 900 | 12 |
| Example 4 | orthorhombic | Fmmm | 11.3 | 900 | 12 |
| Example 5 | orthorhombic | Fmmm | 11.3 | 900 | 12 |
| Example 6 | orthorhombic | Fmmm | 11.0 | 900 | 12 |
| Example 7 | orthorhombic | Fmmm | 11.1 | 900 | 12 |
| Example 8 | orthorhombic | Cmca | 11.1 | 900 | 12 |
| Example 9 | orthorhombic | Fmmm + Cmca | 11.4 | 900 | 12 |
| Example 10 | orthorhombic | Fmmm | 11.3 | 900 | 12 |
| Example 11 | orthorhombic | Fmmm | 11.5 | 900 | 12 |
| Example 12 | orthorhombic | Fmmm | 11.1 | 900 | 12 |
| Example 13 | orthorhombic | Fmmm | 11.4 | 900 | 12 |
| Example 14 | orthorhombic | Fmmm | 11.5 | 900 | 12 |
| Example 15 | orthorhombic | Fmmm | 11.7 | 900 | 12 |
| Example 16 | orthorhombic | Fmmm | 11.3 | 900 | 12 |
| Example 17 | orthorhombic | Fmmm | 11.2 | 900 | 12 |
| Example 18 | orthorhombic | Fmmm | 11.6 | 900 | 12 |
| Example 19 | orthorhombic | Fmmm | 11.1 | 900 | 12 |
| Example 20 | orthorhombic | Fmmm | 11.3 | 900 | 12 |
| Example 21 | orthorhombic | Fmmm | 11.4 | 900 | 12 |
| Example 22 | orthorhombic | Fmmm | 11.2 | 900 | 12 |
| Example 23 | orthorhombic | Fmmm | 11.6 | 900 | 12 |
| Example 24 | orthorhombic | Fmmm | 11.5 | 900 | 12 |
| Example 25 | orthorhombic | Fmmm | 11.4 | 900 | 12 |

Table 5 shows the material used in the Na ion-blocking layer in each of Examples 1 to 25 and Comparative Examples 1 to 4, the thickness d_{block} of the Na ion-blocking layer, and the specific surface area ratio, the ratio of weights per unit area, and the thickness ratio of the active material-containing layer and the Na ion-blocking layer.

**[Table 5]**

| | Na ion-blocking layer | Thickness d_{block} (µm) | Specific surface area ratio S_{oxide}/S_{block} | Ratio of weight per unit area M_{block}/M_{AL}, | Thickness ratio d_{block}/ d_{AL} |
|---|---|---|---|---|---|
| Comparative Example 1 | - | - | - | - | - |
| Comparative Example 2 | Li₄Ti₅O₁₂ | 3.0 | 0.52 | 0.05 | 0.25 |
| Comparative Example 3 | - | - | - | - | - |
| Comparative Example 4 | TiO₂ (B) | 3.0 | 0.51 | 0.06 | 0.21 |
| Example 1 | TiO₂ (B) | 3.0 | 0.17 | 0.025 | 0.12 |
| Example 2 | TiO₂ (B) | 1.1 | 0.11 | 0.01 | 0.02 |
| Example 3 | TiO₂ (B) | 5.2 | 0.52 | 0.11 | 0.22 |
| Example 4 | TiO₂ (B) | 10.3 | 0.98 | 0.75 | 0.29 |
| Example 5 | TiO₂ (B) | 3.1 | 0.50 | 0.05 | 0.22 |
| Example 6 | TiO₂ (B) | 3.0 | 0.49 | 0.05 | 0.21 |
| Example 7 | TiO₂ (B) | 3.1 | 0.50 | 0.05 | 0.20 |
| Example 8 | TiO₂ (B) | 3.0 | 0.51 | 0.05 | 0.22 |
| Example 9 | TiO₂ (B) | 3.0 | 0.49 | 0.05 | 0.22 |
| Example 10 | TiO₂ (B) | 3.0 | 0.51 | 0.05 | 0.21 |
| Example 11 | TiO₂ (B) | 3.1 | 0.50 | 0.05 | 0.22 |
| Example 12 | TiO₂ (B) | 3.1 | 0.50 | 0.05 | 0.21 |
| Example 13 | TiO₂ (B) | 3.0 | 0.49 | 0.05 | 0.20 |
| Example 14 | TiO₂ (B) | 2.9 | 0.51 | 0.05 | 0.22 |
| Example 15 | TiO₂ (B) | 3.1 | 0.51 | 0.05 | 0.21 |
| Example 16 | TiO₂ (B) | 3.0 | 0.50 | 0.05 | 0.21 |
| Example 17 | TiO₂ (B) | 2.9 | 0.49 | 0.05 | 0.21 |
| Example 18 | TiO₂ (B) | 3.1 | 0.50 | 0.05 | 0.22 |
| Example 19 | TiO₂ (B) | 3.0 | 0.50 | 0.05 | 0.20 |
| Example 20 | TiO₂ (B) | 3.1 | 0.51 | 0.05 | 0.22 |
| Example 21 | TiO₂(B) | 3.0 | 0.49 | 0.05 | 0.21 |
| Example 22 | TiO₂ (B) | 3.1 | 0.50 | 0.05 | 0.21 |
| Example 23 | TiO₂ (B) | 2.9 | 0.50 | 0.05 | 0.22 |
| Example 24 | TiO₂ (B) | 3.0 | 0.51 | 0.05 | 0.20 |
| Example 25 | TiO₂ (B) | 3.1 | 0.49 | 0.05 | 0.22 |

### <Measurement of Battery Performance>

For each of the beaker cells of Examples 1 to 25 and Comparative Examples 1 to 4, lithium insertion was performed under a constant current-constant voltage condition of 0.2 C and 1 V for 10 hours under a 25°C environment. Next, for each of the beaker cells of the examples and comparative examples, lithium extraction was performed until the cell voltage reached 3 V at a constant current of 0.2 C. At this time, a coulomb efficiency obtained by dividing the coulomb amount (current amount) in the initial lithium extraction by the coulomb amount (current amount) in the initial lithium insertion was defined as an initial charge-and-discharge efficiency (%).

Next, charge and discharge were performed under the same conditions. The amount of lithium extraction performed until the cell voltage reached 3 V at a constant current of 0.2 C in the second cycle was defined as a 0.2-C discharge capacity. Next, lithium insertion was performed under a constant current-constant voltage condition of 0.2 C and 1 V for 10 hours, and after that, lithium extraction was performed until the cell voltage reached 3 V at a constant current of 10 C. The amount of lithium extraction at this time was defined as a 10-C discharge capacity. Table 6 shows a 10-C/0.2-C discharge capacity ratio.

Next, each glass beaker cell was put in a thermostat set to 45°C or 60°C. After waiting for 1 hour, charge of a constant current of 0.2 C up to 1 V and discharge up to 3 V were performed as one charge-and-discharge cycle, and the charge-and-discharge cycle was repeated 100 times. Table 6 below shows a capacity retention ratio (= capacity in 100th cycle/initial capacity x 100 [%]) serving as an index of the life performance of each active material at 45°C and 60°C.

**[Table 6]**

| | Initial discharge capacity (mAh/g) | Initial charge-and-discharge efficiency (%) | 10-C/0.2-C discharge capacity ratio | 45°C cycles capacity retention ratio (%) | 60°C cycles capacity retention ratio (%) |
|---|---|---|---|---|---|
| Comparative Example 1 | 91.0 | 92.0 | 89.9 | 72.1 | 23.5 |
| Comparative Example 2 | 90.8 | 91.7 | 88.3 | 69.1 | 20.8 |
| Comparative Example 3 | 106.5 | 92.2 | 89.2 | 70.3 | 38.2 |
| Comparative Example 4 | 106.1 | 92.3 | 89.0 | 70.2 | 38.5 |
| Example 1 | 91.2 | 92.2 | 90.3 | 78.5 | 53.6 |
| Example 2 | 133.0 | 93.4 | 92.3 | 85.1 | 60.8 |
| Example 3 | 132.8 | 93.6 | 91.1 | 89.3 | 68.8 |
| Example 4 | 129.1 | 93.0 | 89.9 | 84.3 | 56.7 |
| Example 5 | 133.4 | 93.8 | 93.4 | 90.4 | 70.2 |
| Example 6 | 119.3 | 94.0 | 93.4 | 85.1 | 62.2 |
| Example 7 | 115.0 | 93.7 | 93.1 | 82.5 | 60.3 |
| Example 8 | 102.4 | 93.5 | 92.5 | 82.6 | 57.5 |
| Example 9 | 110.1 | 93.4 | 92.3 | 81.3 | 55.6 |
| Example 10 | 131.0 | 93.7 | 93.1 | 82.5 | 51.9 |
| Example 11 | 133.4 | 93.9 | 95.1 | 86.5 | 69.9 |
| Example 12 | 130.3 | 93.7 | 95.0 | 83.7 | 58.9 |
| Example 13 | 129.7 | 93.5 | 94.1 | 83.1 | 57.8 |
| Example 14 | 127.2 | 92.3 | 92.5 | 81.1 | 60.8 |
| Example 15 | 125.7 | 92.6 | 92.0 | 81.2 | 61.6 |
| Example 16 | 123.8 | 94.1 | 92.8 | 83.3 | 62.6 |
| Example 17 | 120.1 | 93.5 | 93.2 | 80.1 | 56.6 |
| Example 18 | 120.9 | 93.1 | 93.3 | 82.8 | 61.4 |
| Example 19 | 123.1 | 93.7 | 91.5 | 86.3 | 66.5 |
| Example 20 | 128.0 | 93.8 | 93.2 | 83.2 | 62.1 |
| Example 21 | 127.5 | 93.1 | 92.9 | 80.3 | 60.5 |
| Example 22 | 124.9 | 92.7 | 92.3 | 80.4 | 58.3 |
| Example 23 | 100.9 | 92.1 | 93.0 | 81.3 | 63.2 |
| Example 24 | 90.1 | 92.2 | 93.0 | 83.2 | 62.5 |
| Example 25 | 91.1 | 94.6 | 92.3 | 70.8 | 55.3 |

As is apparent from Table 6, the beaker cell of each of Examples 1 to 25 exhibited the initial discharge capacity, charge-and-discharge efficiency, and discharge rate performance equal to or greater than the beaker cells of Comparative Examples 1 to 4. This reveals that even if the Na ion-blocking layer is provided on the surface of the active material-containing layer, as in the electrodes of Examples 1 to 25 and Comparative Examples 2 and 4, a high energy density can be obtained as in the electrodes of Comparative Examples 1 and 3 without the Na ion-blocking layer.

As the result of the cycle test at 45°C, the capacity retention ratio in each of Examples 1 to 24 was higher than those in Comparative Examples 1 to 4, and the capacity retention ratio in Example 25 was higher than those in Comparative Examples 2 to 4. As the result of the cycle test at 60°C, the difference between the capacity retention ratios in Examples 1 to 25 and those in Comparative Examples 1 to 4 was more significant. This reveals that the cycle life at a high temperature increases when the Na ion-blocking layer is disposed on the surface of the active material-containing layer containing a sodium-containing titanium composite oxide.

On the other hand, comparing the result of Comparative Example 1 and that of Comparative Example 2, although an Li₄Ti₅O₁₂ layer was provided on the surface of the active material-containing layer in Comparative Example 2, the exhibited high-temperature life performance was only about the same as in Comparative Example 1, in which no layer of any sort was provided on the surface of the active material-containing layer. This reveals that a layer functioning as the Na ion-blocking layer cannot be obtained by a material like Li₄Ti₅O₁₂, which can have sodium be inserted and extracted.

In addition, comparing the result of Comparative Example 3 and that of Comparative Example 4, although an Na ion-blocking layer using titanium dioxide with excellent selectivity for sodium was provided in Comparative Example 4, the exhibited high-temperature life performance was only about the same as in Comparative Example 3 in which no layer of any sort was provided on the surface of the active material-containing layer. In Comparative Examples 3 and 4, a composite oxide that did not contain sodium was used as the active material of the active material-containing layer. That is, the active material according to each of Comparative Examples 3 and 4 did not contain a sodium-containing titanium composite oxide. For this reason, in both Comparative Examples 3 and 4, it can be considered that sodium had not eluted from the active material-containing layer, and the Na ion-blocking layer did not exert any effect.

### (Example 26)

In Example 26, a nonaqueous electrolyte battery was produced in accordance with the following procedure.

### <Production of Negative Electrode>

First, the particles of the active material of Example 5 was ground so as to obtain an average particle size of 5 µm or less to obtain a ground product. The active material, acetylene black serving as an electro-conductive agent, and polyvinylidene fluoride (PVdF) serving as a binder were added to N-methyl-pyrrolidone (NMP) and mixed to prepare a slurry. At this time, the mass ratio of the active material, acetylene black, and PVdF was set to 90 : 5 : 5. The slurry was applied onto one surface of a current collector made of an aluminum foil having a thickness of 12 µm and dried. After that, press was performed, thereby obtaining a negative electrode of Example 26 which had an active material-containing layer thickness of 25 µm, an electrode density (without including the current collector) of 2.2 g/cm³, and a weight per unit area of 88.0 g/m².

As in Example 1, an Na ion-blocking layer was disposed on the surface of the active material-containing layer of the obtained negative electrode, thereby producing an negative electrode including an electrode construct including the active material-containing layer containing the active material of Example 5 and the Na ion-blocking layer containing a monoclinic titanium dioxide.

### (Production of Positive Electrode)

First, to a commercially available spinel type lithium manganese oxide (LiMn₂O₄) was mixed 5 parts by weight of acetylene black serving as an electro-conductive agent to obtain a mixture. Next, the mixture was dispersed in NMP to obtain a dispersion. To the dispersion was mixed PVdF serving as a binder, in a proportion of 5 parts by weight relative to the lithium manganese oxide, to prepare a positive electrode slurry. A current collector made of aluminum foil was coated with the slurry using a blade. After the obtained product was dried at 130°C for 12 hours under vacuum, it was roll-pressed so that a density of the active material-containing layer (excluding the current collector) was 2.1 g/cm³, to obtain a positive electrode having an electrode layer thickness of 26 µm and weight per unit area of 90.0 g/m².

### (Production of Electrode Group)

The positive electrode and the negative electrode produced as described above were stacked with a polyethylene separator sandwiched therebetween to obtain a stack. Next, this stack was wound and pressed to obtain a flat-shaped wound electrode group. A positive electrode terminal and a negative electrode terminal were attached to this electrode group.

### (Preparation of Nonaqueous Electrolyte)

As a mixed solvent, a mixed solvent of ethylene carbonate and diethyl carbonate (volume ratio of 1 : 1) was prepared. Lithium hexafluorophosphate (LiPF₆) was dissolved in this solvent at a concentration of 1 M. Thus, a nonaqueous electrolyte was prepared.

### (Assembly of Nonaqueous Electrolyte Battery)

Using the electrode group and the nonaqueous electrolyte produced as described above, nonaqueous electrolyte battery of Example 26 was fabricated.

### (Example 27)

In Example 27, a battery was produced by applying a solid electrolyte to an electrode produced in accordance with the same procedure as in Example 26.

PVdF and a commercially available lithium ion conductive solid electrolyte Li₇La₃Zr₂O₁₂ were put in N-methyl-pyrrolidone (NMP) to prepare a slurry. The amount of PVdF relative to the inorganic solid particles was 5 wt%.

The thus obtained slurry was applied onto the surface of the active material-containing layer of the positive electrode. Next, NMP was evaporated from the coat. An inorganic solid electrolyte layer was thus formed on the surface of the positive electrode active material-containing layer.

To obtain a composite between the inorganic solid electrolyte layer on the surface of the positive electrode active material and a polymer electrolyte, propylene carbonate (PC) and diethyl carbonate (DEC) as the precursors of an organic polymer electrolyte were mixed at a volume ratio of 1 : 2 to prepare a solvent mixture. Lithium hexafluorophosphate LiPF₆ was dissolved in the solvent mixture at a concentration of 1.2 M. A liquid organic electrolyte was thus obtained. Next, an acrylonitrile monomer was prepared as a gelling agent. The monomer was added to the liquid organic electrolyte at a concentration of 2 wt%, thereby preparing a coating of an organic electrolyte precursor. The precursor was applied such that it was sufficiently impregnated into the inorganic solid electrolyte layer on the surface of the positive electrode active material, and the coat was heated to 60°C for 6 hours. The monomer was thus polymerized to form polyacrylonitrile (PAN). A composite inorganic solid electrolyte layer including the gel polymer electrolyte (PAN) and the inorganic solid electrolyte layer was thus disposed on the surface of the positive electrode active material. At this time, the average thickness of the inorganic solid electrolyte layer was set to 5 µm, and the minimum thickness was set to 0.5 µm.

The positive electrode active material-containing layer provided with the thus obtained inorganic solid electrolyte layer and a negative electrode active material-containing layer provided with an Na ion-blocking layer were combined in the order of positive electrode active material-containing layer - inorganic solid electrolyte layer - Na ion-blocking layer - negative electrode active material-containing layer, thereby producing a battery containing the composite solid electrolyte.

### <Charge-and-Discharge Test>

A charge-and-discharge test was conducted at room temperature using each of the batteries obtained in Examples 26 and 27. The charge-and-discharge test was conducted in the same manner as those executed for the beaker cells of Examples 1 to 25 except that the cell voltage was set in a voltage range of 1.8 V to 3.1 V as a charge-and-discharge condition. Table 7 shows the 10-C/0.2-C discharge capacity ratio obtained as a result, and the capacity retention ratios after the charge-and-discharge cycles at 45°C and 60°C.

**[Table 7]**

| | 10-C/0.2-C discharge capacity ratio | 45°C cycles capacity retention ratio (%) | 60°C cycles capacity retention ratio (%) |
|---|---|---|---|
| Example 26 | 92.2 | 95.3 | 81.6 |
| Example 27 | 91.9 | 93.7 | 80.9 |

As is apparent from these results, by configuring an electrode including an electrode construct including an Na ion-blocking layer, a battery having an excellent high-temperature cycle life can be obtained.

An electrode construct according to at least one of the approaches and examples described above includes an active material-containing layer containing a sodium-containing titanium composite oxide, and a sodium ion-blocking layer provided on the surface of the active material-containing layer. The sodium-containing titanium composite oxide has a crystal structure belonging to the space group Cmca and/or the space group Fmmm. The sodium ion-blocking layer contains a material through which sodium ions do not pass. The electrode construct having this arrangement can implement a secondary battery, a battery module, and a battery pack capable of exhibiting a high energy density and having excellent output performance and life performance at a high temperature, an electrode including the electrode construct, and a vehicle in which the battery pack is installed.

## Claims

1. An electrode construct comprising:
an active material-containing layer (3b) comprising a sodium-containing titanium composite oxide having a crystal structure belonging to a space group Cmca, a space group Fmmm, or both the space group Cmca and the space group Fmmm; and
**characterized by** a sodium ion-blocking layer (8) disposed on a surface of the active material-containing layer (3b) and containing a material impermeable to sodium ions,
wherein the material impermeable to sodium ions comprises a monoclinic titanium dioxide.

2. The electrode construct according to claim 1, wherein the sodium-containing titanium composite oxide comprises a composite oxide represented by a general formula Li₂₊ₐMl_{2-b}Ti_{6-c}M2_{d}O_{14+δ},
where M1 is Na, or comprises Na and at least one selected from the group consisting of Sr, Ba, Ca, Mg, Cs, Rb, and K,
M2 is at least one selected from the group consisting of Zr, Sn, V, Nb, Ta, Mo, W, Y, Fe, Co, Cr, Mn, Ni, and Al,
a satisfies 0 ≤ a ≤ 6, b satisfies 0 ≤ b < 2, c satisfies 0 ≤ c < 6, d satisfies 0 ≤ d < 6, and δ satisfies -0.5 ≤ δ ≤ 0.5.

3. The electrode construct according to claim 1 or 2, wherein a Na ion concentration at a contact interface between the active material-containing layer (3b) and the sodium ion-blocking layer (8) is higher than that inside the active material-containing layer.

4. The electrode construct according to any one of claims 1 to 3, wherein a weight M_{block} per unit area of the sodium ion-blocking layer (8) with respect to a weight M_{AL} per unit area of the active material-containing layer falls within a range of 0.01 ≤ M_{block}/M_{AL} ≤ 1.0.

5. The electrode construct according to any one of claims 1 to 4, wherein a thickness d_{block} of the sodium ion-blocking layer (8) and a thickness d_{AL} of the active material-containing layer satisfy 0.01 < d_{block}/d_{AL} < 0.3.

6. An electrode (3) comprising the electrode construct according to any one of claims 1 to 5.

7. The electrode (3) according to claim 6, wherein the active material-containing layer (3b) further comprises an electro-conductive agent and a binder.

8. A secondary battery (100) comprising:
a positive electrode (5);
a negative electrode (3); and
an electrolyte,
wherein the negative electrode (3) is the electrode according to claim 6 or 7.

9. The secondary battery (100) according to claim 8, further comprising a negative electrode current collector (3a, 9) stacked onto a face of the active material-containing layer (3b), wherein said face does not have the sodium ion-blocking layer (8) disposed thereon.

10. The secondary battery (100) according to claim 9, wherein the active material-containing layer (3b) and sodium ion-blocking layer (8) are supported in this order on a surface of the negative electrode current collector (3a, 9).

11. The secondary battery (100) according to any one of claims 8 to 10, wherein the electrolyte comprises a solid electrolyte (14).

12. A battery module (200) comprising plural of the secondary batteries (100) according to any one of claims 8 to 11, the secondary batteries (100) being electrically connected in series, in parallel, or in a combination of in a series and in parallel.

13. A battery pack (300) comprising the secondary battery (100) according to any one of claims 8 to 11.

14. The battery pack (300) according to claim 13 further comprising:
an external power distribution terminal (347); and
a protective circuit (344).

15. The battery pack (300) according to claim 13 or 14, comprising plural of the secondary batteries (100), the secondary batteries (100) being electrically connected in series, in parallel, or in a combination of in a series and in parallel.

16. A vehicle (400) comprising the battery pack (300) according to any one of claims 13 to 15.

17. The vehicle (400) according to claim 16, which comprises a mechanism configured to convert kinetic energy of the vehicle (400) into regenerative energy.

## Patentansprüche

1. Elektrodenkonstrukt, umfassend:
eine Aktivmaterial enthaltende Schicht (3b), umfassend ein Natrium-haltiges Titankompositoxid mit einer Kristallstruktur, die zu einer Raumgruppe Cmca, einer Raumgruppe Fmmm oder sowohl zu der Raumgruppe Cmca als auch zu der Raumgruppe Fmmm gehört; und
**gekennzeichnet durch** eine Natriumionenblockierschicht (8), die auf einer Oberfläche der Aktivmaterial enthaltenden Schicht (3b) angeordnet ist und ein für Natriumionen undurchlässiges Material enthält,
wobei das für Natriumionen undurchlässige Material ein monoklines Titandioxid umfasst.

2. Elektrodenkonstrukt gemäß Anspruch 1, wobei das Natriumhaltige Titankompositoxid ein Kompositoxid umfasst, das durch eine allgemeine Formel Li₂₊ₐM1_{2-b}Ti_{6-c}M2_{d}O_{14+δ} dargestellt wird,
worin M1 Na ist oder Na und mindestens eines, ausgewählt aus der Gruppe, bestehend aus Sr, Ba, Ca, Mg, Cs, Rb und K, umfasst,
M2 mindestens eines, ausgewählt aus der Gruppe, bestehend aus Zr, Sn, V, Nb, Ta, Mo, W, Y, Fe, Co, Cr, Mn, Ni und Al, ist
a 0 ≤ a ≤ 6 erfüllt, b 0 ≤ b < 2 erfüllt, c 0 ≤ c < 6 erfüllt, d 0 ≤ d < 6 erfüllt, und δ -0,5 ≤ δ ≤ 0,5 erfüllt.

3. Elektrodenkonstrukt gemäß Anspruch 1 oder 2, wobei eine Na-Ionenkonzentration an einer Kontaktgrenzfläche zwischen der Aktivmaterial enthaltenden Schicht (3b) und der Natriumionenblockierschicht (8) höher als die innerhalb der Aktivmaterial enthaltenden Schicht ist.

4. Elektrodenkonstrukt gemäß einem der Ansprüche 1 bis 3, wobei ein Gewicht M_{block} pro Flächeneinheit der Natriumionenblockierschicht (8) relativ zu einem Gewicht M_{AL} pro Flächeneinheit der Aktivmaterial enthaltenden Schicht in einen Bereich von 0,01 ≤ M_{block}/M_{AL} ≤ 1,0 fällt.

5. Elektrodenkonstrukt gemäß einem der Ansprüche 1 bis 4, wobei eine Dicke d_{block} der Natriumionenblockierschicht (8) und eine Dicke d_{AL} der Aktivmaterial enthaltenden Schicht 0,01 < d_{block}/d_{AL} < 0,3 erfüllen.

6. Elektrode (3), umfassend das Elektrodenkonstrukt gemäß einem der Ansprüche 1 bis 5.

7. Elektrode (3) gemäß Anspruch 6, wobei die Aktivmaterial enthaltende Schicht (3b) zusätzlich ein elektrisch leitendes Mittel und ein Bindemittel umfasst.

8. Sekundärbatterie (100), umfassend:
eine positive Elektrode (5);
eine negative Elektrode (3); und
einen Elektrolyt,
wobei die negative Elektrode (3) die Elektrode gemäß Anspruch 6 oder 7 ist.

9. Sekundärbatterie (100) gemäß Anspruch 8, zusätzlich umfassend einen Negativelektrodenstromkollektor (3a, 9), der auf eine Fläche der Aktivmaterial enthaltenden Schicht (3b) gestapelt ist, wobei die Fläche nicht die Natriumionenblockierschicht (8) darauf angeordnet hat.

10. Sekundärbatterie (100) gemäß Anspruch 9, wobei die Aktivmaterial enthaltende Schicht (3b) und die Natriumionenblockierschicht (8) in dieser Reihenfolge auf einer Oberfläche des Negativelektrodenstromkollektors (3a, 9) gelagert sind.

11. Sekundärbatterie (100) gemäß einem der Ansprüche 8 bis 10, wobei der Elektrolyt einen Festelektrolyt (14) umfasst.

12. Batteriemodul (200), umfassend mehrere der Sekundärbatterien (100) gemäß einem der Ansprüche 8 bis 11, wobei die Sekundärbatterien (100) elektrisch in Reihe, parallel oder in einer Kombination von in Reihe und parallel geschaltet sind.

13. Batteriepack (300), umfassend die Sekundärbatterie (100) gemäß einem der Ansprüche 8 bis 11.

14. Batteriepack (300) gemäß Anspruch 13, zusätzlich umfassend:
einen externen Stromverteilungsanschluss (347); und
eine Schutzschaltung (344).

15. Batteriepack (300) gemäß Anspruch 13 oder 14, umfassend mehrere der Sekundärbatterien (100), wobei die Sekundärbatterien (100) elektrisch in Reihe, parallel oder in einer Kombination von in Reihe und parallel geschaltet sind.

16. Fahrzeug (400), umfassend den Batteriepack (300) gemäß einem der Ansprüche 13 bis 15.

17. Fahrzeug (400) gemäß Anspruch 16, das einen Mechanismus umfasst, der konfiguriert ist, um kinetische Energie des Fahrzeugs (400) in regenerative Energie umzuwandeln.

## Revendications

1. Construction d'électrode comprenant :
une couche contenant un matériau actif (3b) comprenant un oxyde composite de titane contenant du sodium présentant une structure cristalline appartenant à un groupe spatial Cmca, à un groupe spatial Fmmm, ou à la fois au groupe spatial Cmca et au groupe spatial Fmmm ; et
**caractérisée par** une couche de blocage d'ions de sodium (8) disposée sur une surface de la couche contenant un matériau actif (3b) et contenant un matériau imperméable aux ions de sodium,
dans laquelle le matériau imperméable aux ions de sodium comprend un dioxyde de titane monoclinique.

2. Construction d'électrode selon la revendication 1, dans laquelle l'oxyde composite de titane contenant du sodium comprend un oxyde composite représenté par une formule générale Li₂₊ₐM1_{2-b}Ti_{6-c}M2_{d}O_{14+δ},
où M1 est Na, ou comprend Na et au moins l'un sélectionné à partir du groupe consistant en Sr, Ba, Ca, Mg, Cs, Rb, et K,
M2 est au moins l'un sélectionné à partir du groupe consistant en Zr, Sn, V, Nb, Ta, Mo, W, Y, Fe, Co, Cr, Mn, Ni, et Al,
a satisfait à 0 ≤ a ≤ 6, b satisfait à 0 ≤ b < 2, c satisfait à 0 ≤ c < 6, d satisfait à 0≤ d < 6, et δ satisfait à -0,5 ≤ δ ≤ 0,5.

3. Construction d'électrode selon la revendication 1 ou 2, dans laquelle une concentration en ions Na au niveau d'une interface de contact entre la couche contenant un matériau actif (3b) et la couche de blocage d'ions de sodium (8) est supérieure à celle à l'intérieur de la couche contenant un matériau actif.

4. Construction d'électrode selon l'une quelconque des revendications 1 à 3, dans laquelle un poids M_{block} par unité de surface de la couche de blocage d'ions de sodium (8) par rapport à un poids M_{AL} par unité de surface de la couche contenant un matériau actif tombe au sein d'une plage de 0,01 ≤ M_{block}/M_{AL} ≤ 1,0.

5. Construction d'électrode selon l'une quelconque des revendications 1 à 4, dans laquelle une épaisseur d_{block} de la couche de blocage d'ions de sodium (8) et une épaisseur d_{AL} de la couche contenant un matériau actif satisfont à 0,01 < d_{block}/d_{AL} < 0,3.

6. Électrode (3) comprenant la construction d'électrode selon l'une quelconque des revendications 1 à 5.

7. Électrode (3) selon la revendication 6, dans laquelle la couche contenant un matériau actif (3b) comprend en outre un agent électroconducteur et un liant.

8. Batterie secondaire (100) comprenant :
une électrode positive (5) ;
une électrode négative (3) ; et
un électrolyte,
dans laquelle l'électrode négative (3) est l'électrode selon la revendication 6 ou 7.

9. Batterie secondaire (100) selon la revendication 8, comprenant en outre un collecteur de courant d'électrode négative (3a, 9) empilé sur un côté de la couche contenant un matériau actif (3b), dans laquelle ledit côté ne présente pas la couche de blocage d'ions de sodium (8) disposée sur celui-ci.

10. Batterie secondaire (100) selon la revendication 9, dans laquelle la couche contenant un matériau actif (3b) et la couche de blocage d'ions de sodium (8) sont soutenues dans cet ordre sur une surface du collecteur de courant d'électrode négative (3a, 9).

11. Batterie secondaire (100) selon l'une quelconque des revendications 8 à 10, dans laquelle l'électrolyte comprend un électrolyte solide (14).

12. Module de batterie (200) comprenant une pluralité des batteries secondaires (100) selon l'une quelconque des revendications 8 à 11, les batteries secondaires (100) étant électriquement raccordées en série, en parallèle, ou dans une combinaison de série et de parallèle.

13. Bloc-batterie (300) comprenant la batterie secondaire (100) selon l'une quelconque des revendications 8 à 11.

14. Bloc-batterie (300) selon la revendication 13, comprenant en outre :
une borne de distribution électrique externe (347) ; et
un circuit de protection (344).

15. Bloc-batterie (300) selon la revendication 13 ou 14, comprenant une pluralité des batteries secondaires (100), les batteries secondaires (100) étant électriquement raccordées en série, en parallèle, ou dans une combinaison de série et de parallèle.

16. Véhicule (400) comprenant le bloc-batterie (300) selon l'une quelconque des revendications 13 à 15.

17. Véhicule (400) selon la revendication 16, qui comprend un mécanisme configuré pour convertir l'énergie cinétique du véhicule (400) en énergie régénérative.
